(19) Europäisches Patentamt
European Patent Office
Office européen des brevets

(11) **EP 2 256 688 B1**

(12) **EUROPEAN PATENT SPECIFICATION**

(45) Date of publication and mention
of the grant of the patent:
**03.12.2014 Bulletin 2014/49**

(51) Int Cl.:
**G06T 5/50** *(2006.01)* **H04N 5/235** *(2006.01)*

(21) Application number: **10004593.9**

(22) Date of filing: **30.04.2010**

(54) **Image obtaining apparatus, image synthesis method and microscope system**

Bilderfassungsvorrichtung, Bildsyntheseverfahren und Mikroskopsystem

Appareil d'obtention d'images, procédé de synthèse d'images et système de microscope

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.05.2009 JP 2009125859**

(43) Date of publication of application:
**01.12.2010 Bulletin 2010/48**

(73) Proprietor: **OLYMPUS CORPORATION**
**Shibuya-ku**
**Tokyo 151-0072 (JP)**

(72) Inventors:
• **Yokomachi, Yuki**
**Shibuya-ku**
**Tokyo 151-0072 (JP)**

• **Arai, Yujin**
**Shibuya-ku**
**Tokyo 151-0072 (JP)**

(74) Representative: **Gunzelmann, Rainer**
**Wuesthoff & Wuesthoff**
**Patent- und Rechtsanwälte**
**Schweigerstraße 2**
**81541 München (DE)**

(56) References cited:
**JP-A- 4 049 896 JP-A- 2003 046 857**
**US-A1- 2004 207 734 US-A1- 2010 110 180**
**US-B1- 6 972 791**

## Description

## Background of the Invention

## Field of the Invention

The present invention relates to image processing techniques, especially a technique for obtaining a high-quality image from a plurality of captured images.

## Description of the Related Art

Currently, image capturing apparatuses are generally configured to have image sensors using a CCD (Charge Coupled Device), CMOS (Complementary Metal Oxide Semiconductor), and the like. Such image sensors have a narrower dynamic range for contrast, compared with that of photographic films and human vision. For this reason, a problem may emerge in camera shooting in a scene with strong contrast (shooting with backlight or indoor and outdoor simultaneous shooting) or in capturing images for observing industrial samples (such as an IC chip and an electronic substrate) related to microscopic measurement.

For example, when an observation image of a subject is captured with the exposure time adjusted to a value that is appropriate for the dark area of the subject, the light area of the subject may suffer "white blow-out". On the other hand, when an observation image of the subject is captured with the exposure time adjusted to a value that is appropriate for the light area of the subject, the dark area of the subject may suffer "black out". The "white blow-out" is also called "halation", "white out", "over-exposure" etc., and the "black out" is also called "under-exposure".

Some techniques have been proposed for such problems.

For example, Japanese Laid-open Patent Publication No. 6-141229 proposes an image capturing apparatus with which variable control can be performed for the image capturing time. The image capturing apparatus obtains a wide dynamic range image (an image with a wide dynamic range for contrast) by alternating long exposure-time image capturing and short exposure-time image capturing and synthesizing the two images with the different image capturing times.

Meanwhile, for example, Japanese Laid-open Patent Publication No. 2003-46857 proposes a technique for preventing the decline of the frame rate due to the capturing of a plurality of images used for generating a wide dynamic range image. This technique makes it possible to generate a wide dynamic range image at the same frame rate as for taking in the image. According to this technique, long exposure-time image capturing and short exposure-time image capturing are performed alternately, and a synthesis algorithm of an image captured with the long exposure time and an image captured with the short exposure-time immediately before or after the image captured with the long exposure time, and a synthesis algorithm of an image captured with the short exposure time and an image captured with the long exposure-time immediately before or after the image captured with the short exposure time are performed alternately. Thus, this technique virtually generates a wide dynamic range image for one frame from captured images for one frame. However, according to this technique, the capture of an observation image is performed with the entire area of the light receiving surface of the image sensor, and the wide dynamic range image is obtained by synthesizing images captured in the entire area. For this reason, the generation frame rate for the wide dynamic range image is limited by the time required for obtaining images with the entire area in both image capturing with the long exposure time and image capturing with the short exposure time.

Further technological background can be found in US 6,972,791 B1, JP 4 049896 B2 and US 2004/0207734 A1.

## Summary of the Invention

An image obtaining apparatus being an aspect of the present invention and an image synthesis method being another aspect of the present invention are provided according to the independent claims.

Preferred features of the invention are recited in the dependent claims.

## Brief Description of the Drawings

The present invention will be more apparent from the following detailed description when the accompanying drawings are referenced.

Fig. 1 is a diagram illustrating a first example of the configuration of an image capturing apparatus for a microscope with which the present invention is implemented.

Fig. 2 is a diagram illustrating a microscope system being an implementation example of the image capturing apparatus for a microscope in Fig. 1.

Fig. 3A is a diagram describing an all-pixel reading operation.

Fig. 3B is a diagram describing a partial reading operation.

Fig. 4 is a timing chart of a drive signal of an image sensor.

Fig. 5A is a flowchart illustrating process details of an original entire-image capturing control process.

Fig. 5B is a flowchart illustrating process details of an image capturing mode switching control process.

Fig. 5C is a flowchart illustrating process details of a first example of a wide dynamic range image capturing control process.

Fig. 5D is a flowchart illustrating process details of a wide dynamic range image synthesis control process.

Fig. 6A is a diagram illustrating a display screen example for the capture of an original entire-area image.

Fig. 6B is a diagram illustrating a display screen example for obtaining an entire-area image.

Fig. 7 is a diagram (part 1) describing the synthesis of a wide dynamic range image.

Fig. 8 is a diagram illustrating a second example of the configuration of an image capturing apparatus for a microscope with which the present invention is implemented.

Fig. 9 is a diagram describing the setting of a region of interest on the basis of a threshold value.

Fig. 10 is a diagram illustrating a variation example of the configuration of the image capturing apparatus for a microscope illustrated in Fig. 1 and Fig. 8.

Fig. 11 is a flowchart illustrating process details of a second example of a wide dynamic range image capturing control process.

Fig. 12 is a diagram (part 2) describing the synthesis of a wide dynamic range image.

**Description of the Preferred Embodiments**

Hereinafter, embodiments of the present invention are explained in accordance with drawings.

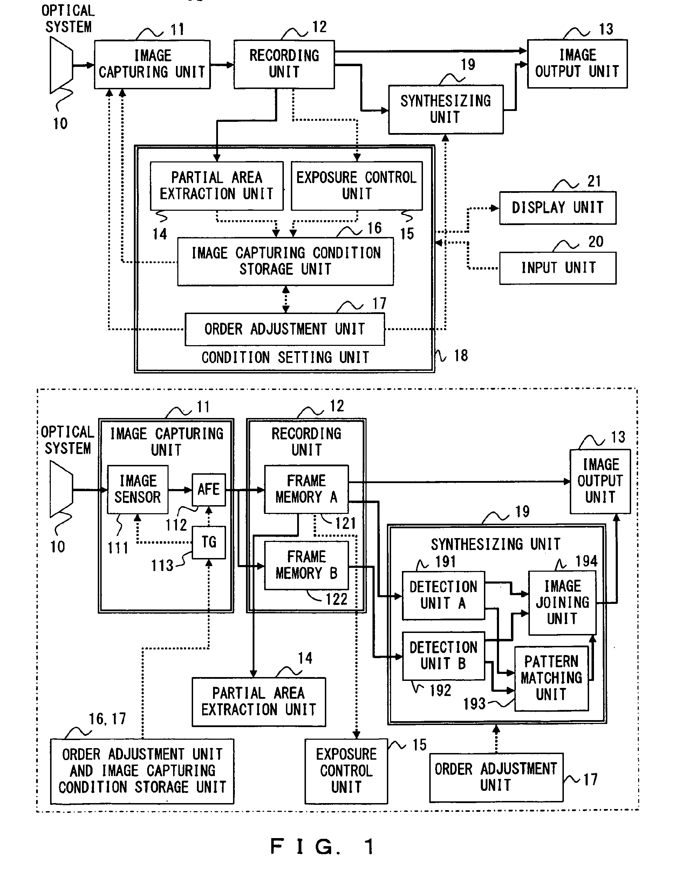

Fig. 1 is explained first. Fig. 1 illustrates a first example of the configuration of the image capturing apparatus for a microscope that is an image obtaining apparatus with which the present invention is implemented.

This image capturing apparatus for a microscope (hereinafter referred to as "the image capturing apparatus") captures one of a long-time exposure image and a short-time exposure image used for the generation of a wide dynamic range image, as an image (hereinafter, referred to as an "original entire-area image") captured with the entire area of the light-receiving surface of the image sensor, and captures the other of a long-time exposure image and a short-time exposure image as an image (hereinafter, referred to as a "partial-area image") obtained by capturing an observation image in a partial area of the light-receiving surface of the image sensor. The generation of a wide dynamic range image is performed by synthesizing the original entire-area image and the partial-area image obtained as described above.

As illustrated in Fig. 1, the image capturing apparatus has an optical system 10, an image capturing unit 11, a recording unit 12, an image output unit 13, a condition setting unit 18, a synthesizing unit 19, an input unit 20, and a display unit 21. The condition setting unit 18 has a partial area extraction unit 14, an exposure control unit 15, an image capturing condition storage unit 16 and an order adjustment unit 17.

The optical system 10 has optical components such as a lens or an optical filter, and makes the light from the subject enter the image capturing unit 11 to form an observation image. The image capturing unit 11 captures the formed observation image, and outputs a digital image signal that represents the picture of the observation image to the recording unit 12. The recording unit 12 records the image signal.

The image output unit 13 reads out the image signal recorded in the recording unit 12, and displays and outputs the picture of the observation image represented by the image signal. Meanwhile, the image signal recorded in the recording unit 12 is also transferred to the partial area extraction unit 14 and the exposure control unit 15 of the condition setting unit 18. The partial area extraction unit 14 decides a region of interest for capturing a partial-area image, in the picture of the observation image. The exposure control unit 15 decides a capturing condition (here, the exposure time) for capturing the picture, in accordance with the luminance of the picture in the region of interest. The results of the decision of the region of interest and the exposure time are sent to the image capturing condition storage unit 16, and stored there as the image capturing conditions for the partial-area image.

The order adjustment unit 17 adjusts the order of the image capturing conditions stored in the image capturing condition storage unit 16, and controls the image capturing unit 11 so that it captures the original entire-area image and the partial-area image alternately. In addition, the order adjustment unit 17 performs control of the timing of the image synthesis in the synthesizing unit 19.

The condition setting unit 18 reflects, in the partial area extraction unit 14, the exposure control unit 15, the image capturing condition storage unit 16 and the order adjustment unit 17, parameters input from the user of the image capturing apparatus to the input unit 20, and also displays and outputs the result of the reflection by the display unit 21. The parameters include ones related to the region of interest, the exposure time, the image capturing conditions etc. Details of the parameters are described later.

The original entire-area image and the partial-area image captured by the image capturing unit 11 are temporarily recorded in the recording unit 12 and after that, transferred to the synthesizing unit 19 from the recording unit.

The synthesizing unit 19 performs pattern matching of the original entire-area image and the partial-area image, and performs a synthesis process after that. The image output unit 13 displays and outputs the wide dynamic range image of the observation image generated by the synthesis process.

In the respective constituent elements illustrated in Fig. 1, the image capturing unit 11, the recording unit 12, the condition setting unit 18 and the synthesizing unit 19 are further explained.

The image capturing unit 11 has an image sensor 111, an AFE (Analog Front End) 112 and a TG (Timing Generator) 113.

The image sensor 111 is an image sensor such as a CCD. The optical system 10 captures the observation image of the subject formed on the effective light-receiving surface of the image sensor 111, and performs photoelectric conversion of the observation image to output an electric signal.

In the AFE 112, an A/D (analog-digital) conversion of the electric signal output from the image sensor 111 is performed, after CDS (Correlated Double Sampling) process and an AGC (Automatic Gain Control) are performed for the electric signal. The AFE 112 outputs a digital image signal obtained as described above and represents the picture of the observation image to the recording unit 12. Meanwhile, it is assumed here that the dynamic range of the digital image signal (the dynamic range of the luminance value (pixel value) of each pixel constituting the picture) is 8 bit (the values that the luminance value of the pixel may take are 256 values from "0" to "255").

The TG 113 gives a drive signal to the image sensor 111, and also gives a synchronization signal to the AFE 112. In the image capturing apparatus in Fig. 1, the TG 113 performs control of reading out of the original entire-area image and reading out of the partial-area image with respect to the image sensor 111.

The recording unit 12 has a frame memory A121 and a frame memory B122, and records digital image signals output from the AFE 112. Here, the frame memory A121 records a digital image signal for the original entire-area image of the observation image, and the frame memory B122 records a digital image signal for the partial-area image of the observation image. Meanwhile, the image output unit 13 reads out the digital image signal recorded in the frame memory A121, and displays and outputs the original entire-area image of the observation image represented by the image signal.

In the following description, a digital image signal recorded in the frame memory A121 may be represented simply as an "original entire-area image", and a digital image signal recorded in the frame memory B122 may be represented simply as a "partial-area image".

The condition setting unit 18 has the partial area extraction unit 14, the exposure control unit 15, the image capturing condition storage unit 16 and the order adjustment unit 17, as described above.

The partial area extraction unit 14 decides and extracts a region of interest for capturing a partial-area image, in the picture of the observation image, with respect to the original entire-area image recorded in the frame memory A121.

The exposure control unit 15 receives information of the exposure time input by the user to the input unit 20, and decides the exposure time for capturing the picture, in accordance with the information and the luminance of the picture in the region of interest.

The image capturing condition storage unit 16 stores and holds the region of interest extracted by the partial area extraction unit 14 and the exposure time for capturing the picture in the region of interest decided by the exposure control unit 15, as the image capturing conditions for capturing the partial-area image.

The order adjustment unit 17 reads out the image capturing conditions held in the image capturing conditions storage unit 16, and sends the read-out image capturing conditions to the TG 113 following a predetermined order. More specifically, the order adjustment unit 17 sends the image capturing condition (first exposure condition) of the original entire-area image and the image capturing condition (second exposure condition) of the partial-area image alternately to the TG 113. When the TG 113 receives the first exposure condition, it sets the exposure condition to the first exposure condition, and then controls the image sensor 111 to capture the original entire-area image. Meanwhile, when the TG 113 receives a second exposure condition that is different from the first exposure condition, it sets the exposure condition to the second exposure condition, and then controls the image sensor 111 to capture the partial-area image.

The synthesizing unit 19 has a detection unit A191, a detection unit B192, a pattern matching unit 193 and an image joining unit 194, and synthesize an original entire-area image and a partial-area image to obtain an entire-area image having a wider dynamic range than the original entire-area image.

The detection unit A191 (first detection unit) reads out an original entire-area image recorded in the frame memory A121, and separates the original entire-area image into an area X that exceeds a threshold value and an area X- other than the area X. More specifically, the detection unit A191 detects, from the original entire-area image, an area X (replacement-target area) that consists of a group of pixels of which luminance value exceeds a predetermined threshold value in the pixels constituting the original entire-area image, and separates the original entire-area image into the area X and the area X- other than the area X.

The detection unit B192 (second detection unit) reads out a partial-area image recorded in the frame memory B122, and detects, from the partial-area image, an area Y (replacement area) that is estimated to correspond to the area X in the original entire-area image. More specifically, the detection unit B192 detects, from a partial-area image recorded in the frame memory B122, an area Y that is estimated to exceed a threshold value in the original entire-area image on the basis of the ratio of exposure times for the original entire-area image and the partial-area image.

The pattern matching unit 193 generates an area Z by performing pattern matching of the area X extracted by the detection unit A191 and the area Y extracted by the detection unit B192. More specifically, the pattern matching unit 193 changes the shape of the area Y, to generate an area X in which the shapes of the contours of the area Y and the area X are matched.

The image joining unit 194 performs feedback of the pattern matching result in the pattern matching unit 193, and joins the area Z (that is, the are Y in the partial-area image after its shape is changed by the pattern matching unit 193), and the area X-, to generate a synthesized image. More specifically, the image joining unit 194 performs an image synthesis process to replace the picture in the area X in the original entire-area image with the picture in the area Z to join the picture of the area X- in the original entire-area image and the picture of the area X. The synthesized image obtained as describe is an entire-area image (hereinafter, referred to as a "wide dynamic range image") that has a wider dynamic range than that for the original entire-area image before the synthesis. The image output unit 13 displays and outputs the synthesized image.

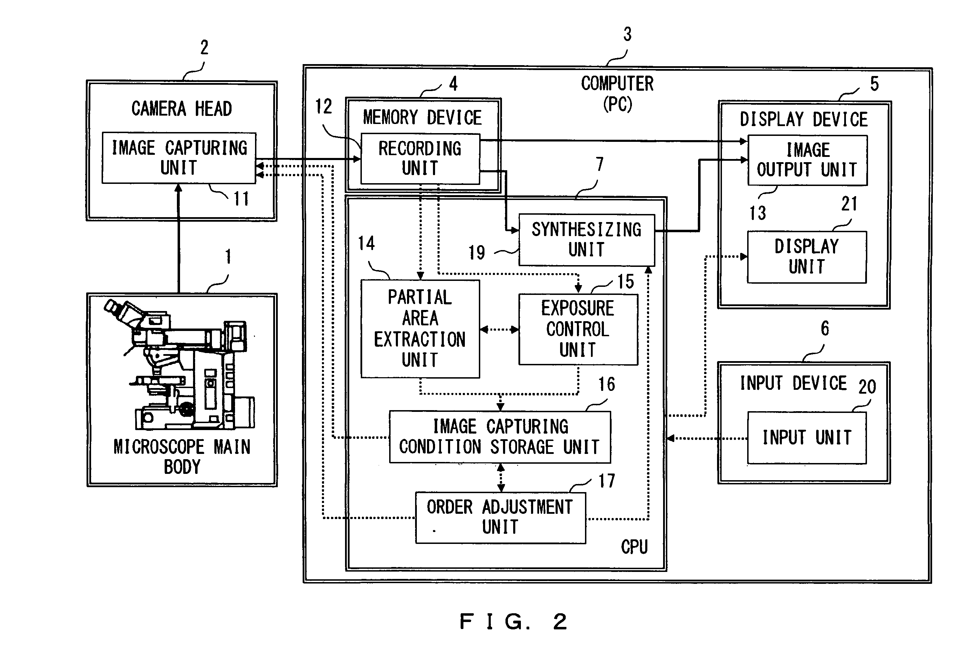

A microscope system being an implementation example of the image capturing apparatus configured as described above is illustrated in Fig. 2. However, the implementation of the image capturing apparatus is not limited to the example in Fig. 2.

In the implementation example in Fig. 2, the optical system 10 (not illustrated in Fig. 2) is implemented in a microscope main body 1, the image capturing unit 11 is implemented in a camera head 2, and the other constituent elements are implemented in a computer 3.

The microscope main body 1 is for obtaining a microscopic image of a sample. The microscopic image obtained by the microscope main body 1 is formed as an observation image on the light-receiving surface of the image sensor 111 provided in the image capturing unit 11 implemented in the camera head 2.

In the computer 3, more specifically, the recording unit 12 is implemented in the memory device 4 being a RAM (Random Access Memory), the image output unit 13 and the display unit 21 are implemented in a display device 5, and the input unit 20 is implemented in an input device 6 such as a keyboard device and a mouse device.

Meanwhile, the condition setting unit 18 (not illustrated in Fig. 2) having he partial area extraction unit 14, the exposure control unit 15, the image capturing condition storage unit 16 and the order adjustment unit 17, and the synthesizing unit 19 are implemented in a CPU (Central Processing Unit) 7. The respective functions of the partial area extraction unit 14, the exposure control unit 15, the image capturing condition storage unit 16, the order adjustment unit 17 and the synthesizing unit 19 can be provided by the CPU 7 by making the CPU 7 read out and execute a predetermined control program that has been stored in a storage device not illustrated in the drawing in advance.

Meanwhile, in Fig. 2, the memory device 4, the display device 5, the input device 6 and the CPU 7 are connected through a bus and an interface circuit not illustrated in the drawing, to be capable of exchanging data with each other. The CPU 7 also performs operation management of the memory device 4, the display device 5 and the input device 6.

Next, the capture of the original entire-area image and the partial-area image performed by controlling the image sensor 111 by the TG 113 is explained.

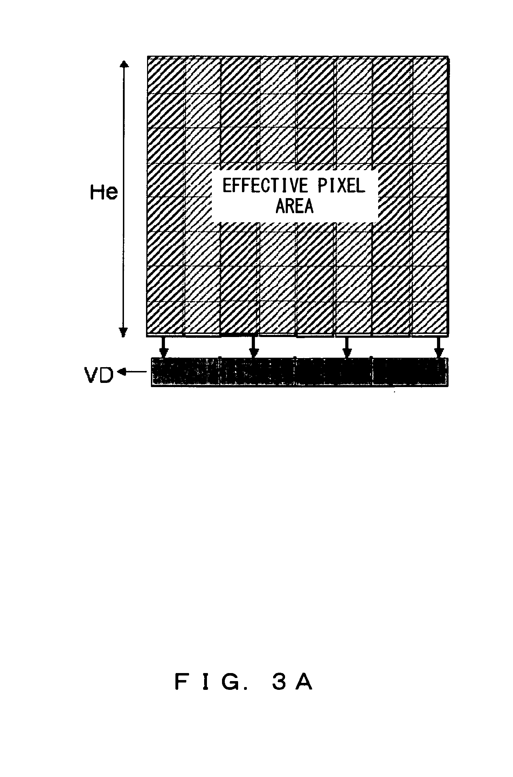

First, the all-pixel reading operation performed in the capture of the original entire-area image is explained with reference to FIG. 3A.

In the capture of the original entire-area image, the period of the vertical synchronization signal (VD) of the image sensor 111 needs to be more than the period obtained by multiplying the period (H) of its horizontal synchronization signal by the number of light-receiving pixels (He) in the vertical direction on the light-receiving surface of the image sensor 111. The reading out operation of an electric charge generated in each light-receiving pixel with the entire light-receiving surface being the effective pixel area performed with the VD set as described above is the all-pixel reading operation.

For example, in a CCD whose number of effective pixels is 1360 x 1024 (about 1.4 million pixels), the CCD has 1024 horizontal scanning lines, and the VD signal needs to have a period of more than 1024H (H is the period of the horizontal synchronization signal).

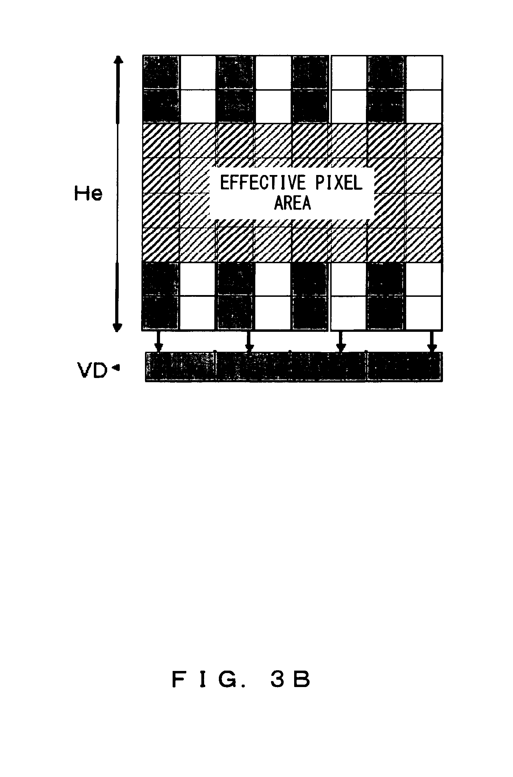

Next, the partial reading operation performed in the capture of the partial-area image is explained with reference to Fig. 3B.

In the partial reading operation, the period of the VD is set as a multiple of a number that is smaller than He, with respect to H, compared to the all-pixel reading operation. The reading out operation of an electric charge generated in each light-receiving pixel with a part of the light-receiving surface as the effective pixel area performed with the VD set as described above is the partial operation. In the partial reading operation, the area including the light-receiving pixels for which the reading out of the generated electric charge is performed is narrower compared with that in the all-pixel reading operation, and the period of the VD is shorter accordingly, making it possible to speed up the reading out.

Regarding the partial reading operation for the CCD, some techniques such as the partial scan and high-speed charge flushing have been known already. For example, in a CCD whose number of effective pixels is 1360 x 1024 (about 1.4 million pixels), it is assumed that the number of horizontal scanning lines in the partial-area image that are read out in the partial reading operation is 424, and every 10 lines of the remaining 600 horizontal scanning lines are transferred by the high-speed flushing. In this case, the period of the VD is set as {424+(600/10)} H=484H.

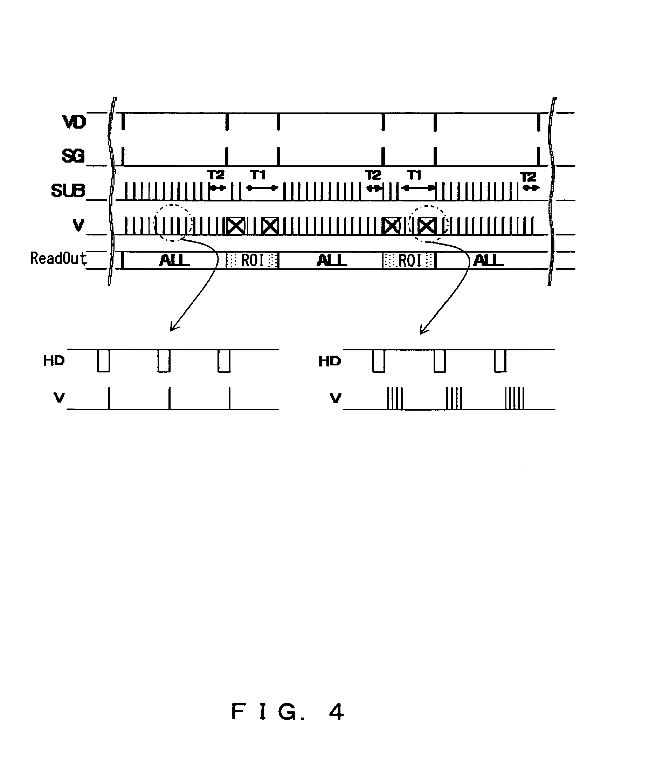

Here, Fig. 4 is explained. Fig. 4 is a timing chart of a drive signal of the image sensor 111 generated by the TG 113.

In Fig. 4, "VD" is a vertical synchronization signal, and "HD" represents a horizontal synchronization signal. Meanwhile, "SG" represents a transport pulse signal for transporting the electric charge from each light-receiving pixel to a transfer line, "SUB" represents an electric shutter pulse signal for discharging the charge from the transfer line to the substrate, and "V" represents a vertical transfer clock signal for driving a vertical transfer path. In addition, "ReadOut" represents a period in which image data captured by the image capturing unit 11 is transferred to the recording unit 12. Here, "ALL" is the transfer period of the original entire-area image, and "ROI" is the transfer period of the partial-area image.

In Fig. 4, SG and SUB are generated from VD. Here, the period between when SUB that is generated continuously is discontinued and when the next SG signal is generated is the accumulation time for the electric charge after photoelectric conversion, which practically corresponds to the exposure time. Here, the time "T1" in Fig. 4 is the exposure time for the original entire-area image, and the time "T2" us the exposure time for the partial-area image. The TG 113 sets the time "T1" and "T2" alternately by controlling them as needed, to make the image sensor 111 capture the original entire-area image and the partial-area image alternately.

Further, in the transfer period "ROI" for the partial-area image, the TG 113 generates a number of vertical transfer cloak signals "V" with a short period for the pixels in the area other than the effective pixel area, to make the image sensor 111 perform the high-speed flushing operation. This shortens the transfer time of the partial-area image to the recording unit 12.

Next, the operation of the image capturing apparatus is described with reference to the respective drawings.

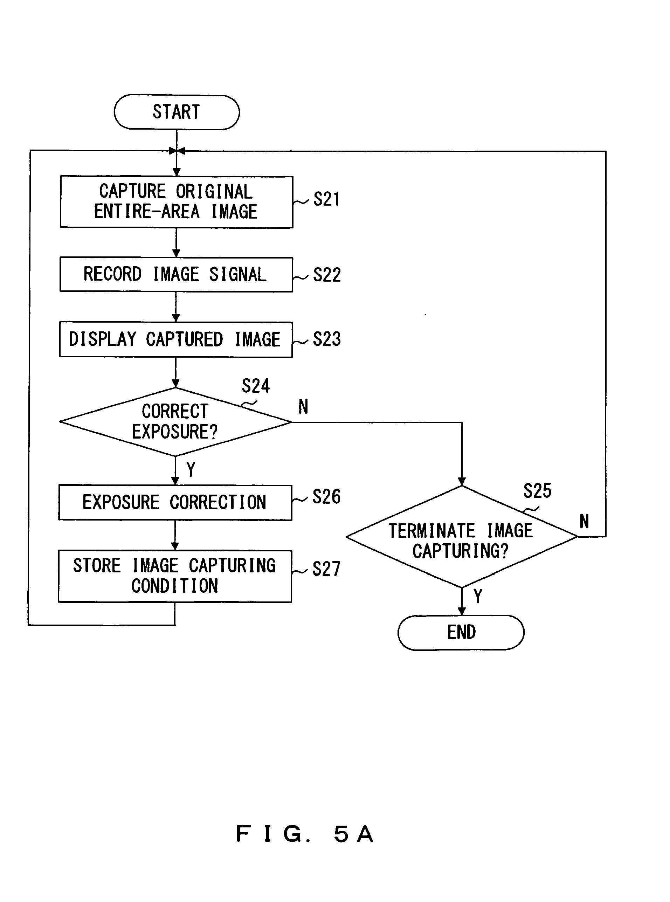

Fig. 5A-Fig. 5D, Fig. 6A andFig. 6B, and Fig. 7 are explained respectively.

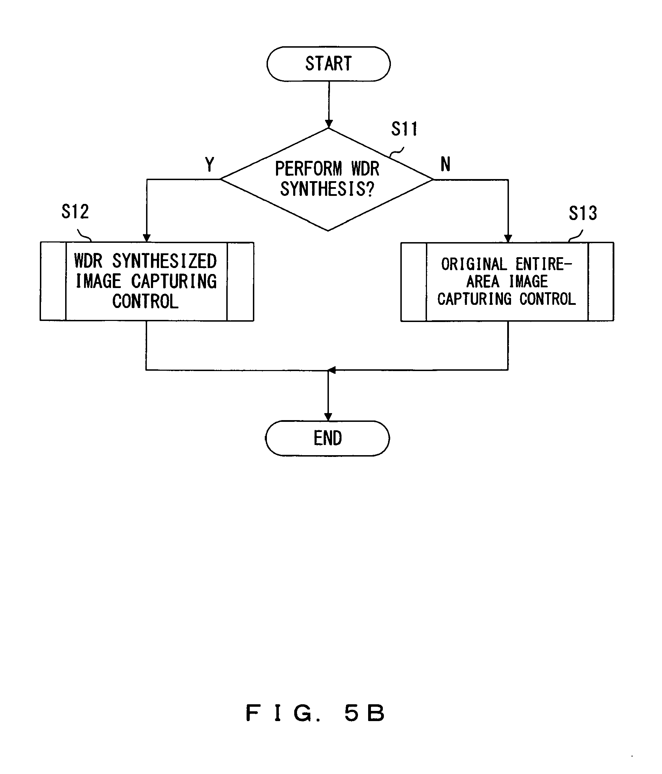

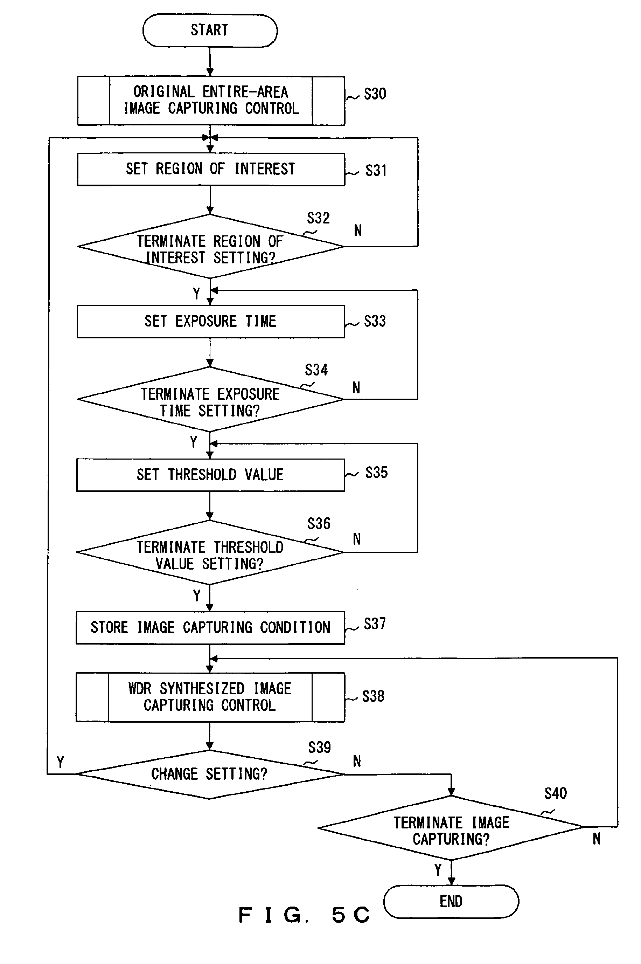

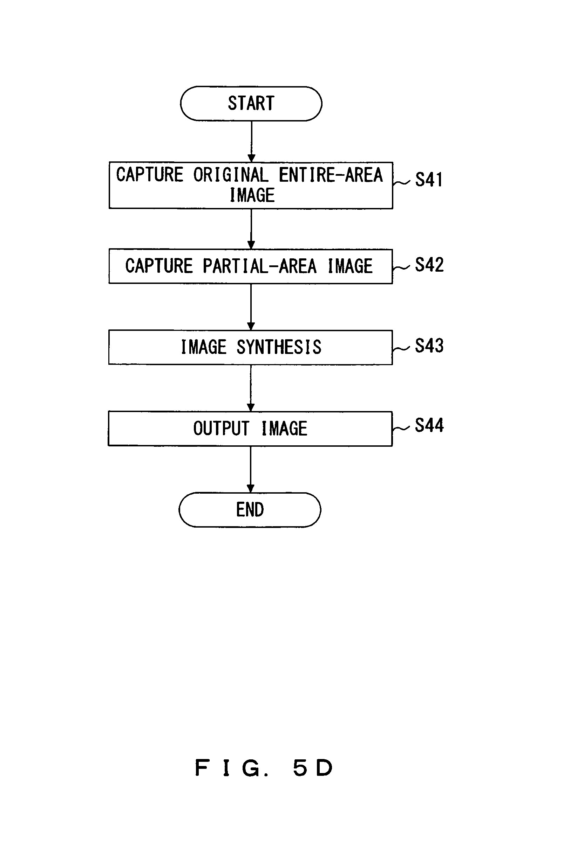

Fig. 5A is a flowchart illustrating the process details of an original entire-area image capturing control process, and Fig. 5B is a flowchart illustrating the process details of an image capturing mode switching control process. Fig. 5C is a flowchart illustrating the process details of a first example of a wide dynamic range image capturing control process, and Fig. 5D is a flowchart illustrating the process details of a wide dynamic range image synthesis control process. Meanwhile, in the implementation example in Fig. 2, these control processes are performed by the CPU 7. The CPU 7 becomes capable of performing these control processes by reading out and executing predetermined control programs that have been stored in a storage device not illustrated in the drawing in advance.

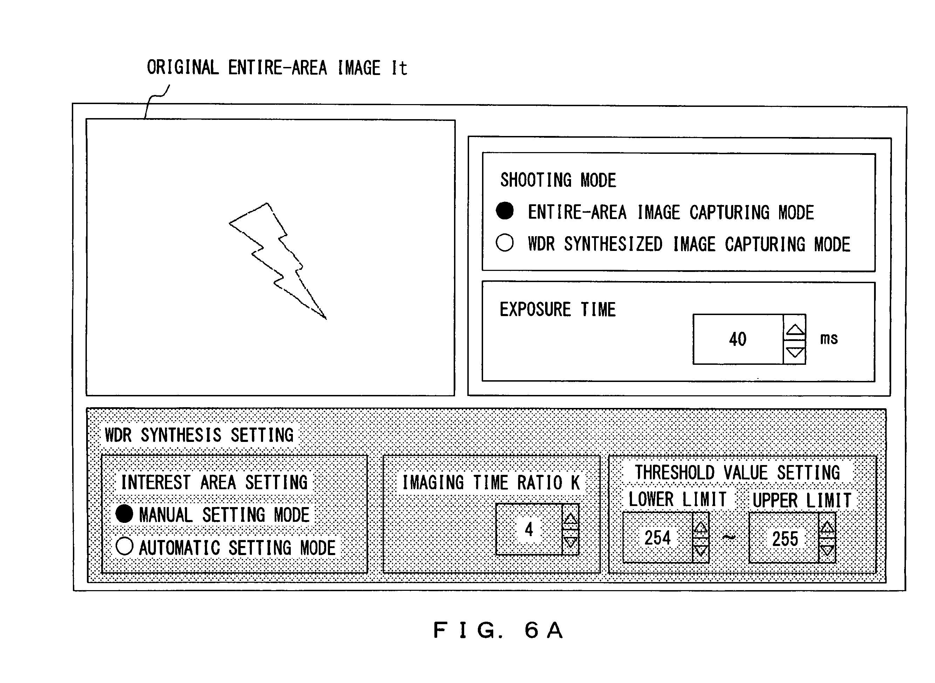

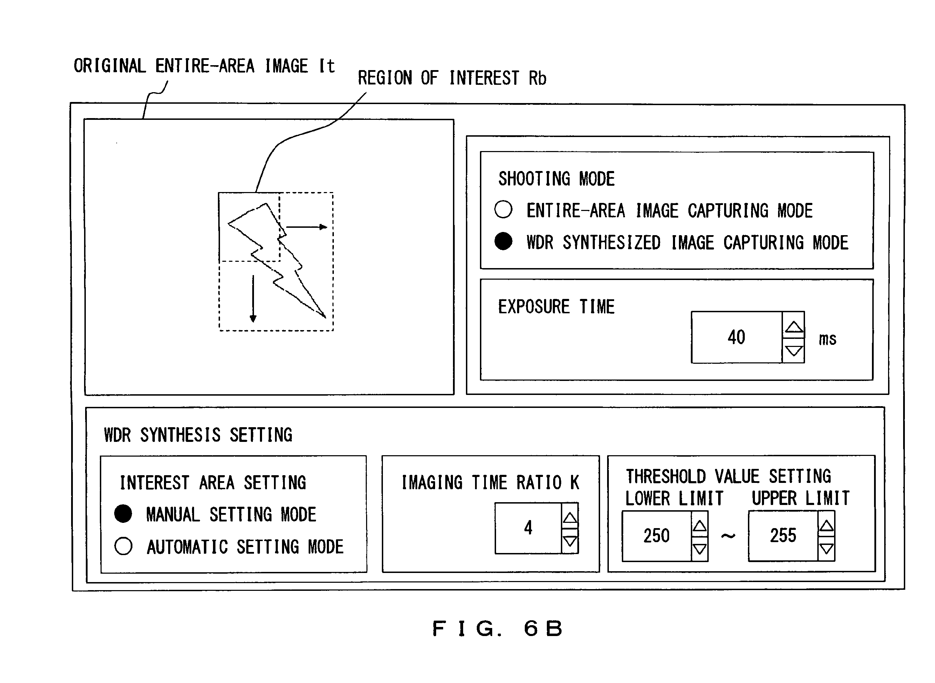

Fig. 6A and Fig. 6B are examples of screen displays on the display device 5, which are examples of screen displays by the image output unit 13. Fig. 6A is a screen display example for the capture of the original entire-area image, and Fig. 6B is a screen display example for the capture of the wide dynamic range image.

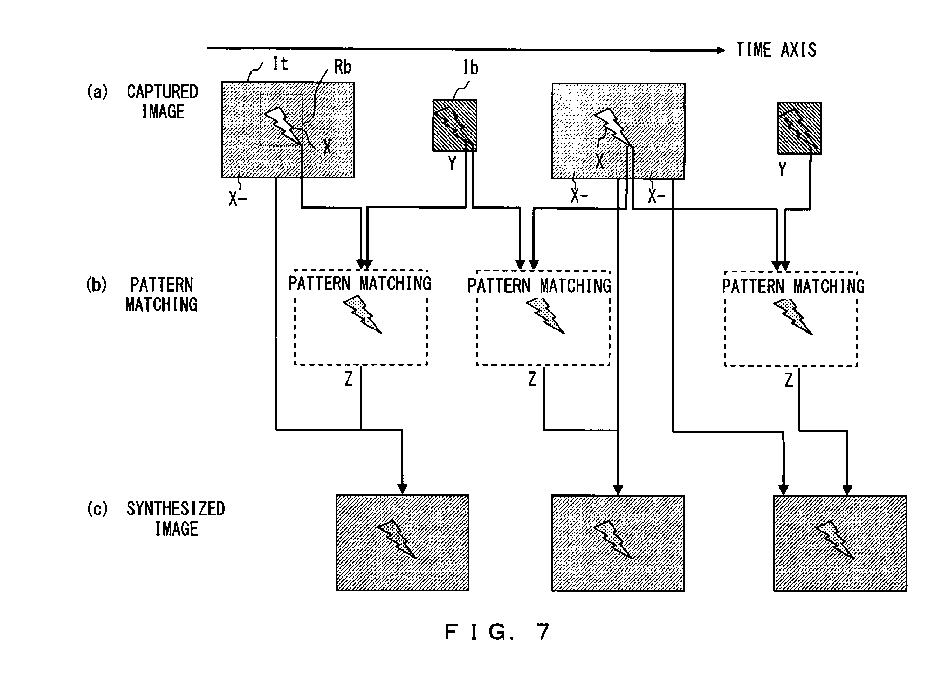

Fig. 7 is a diagram illustrating the synthesis of the wide dynamic range image.

First, the original entire-area image capturing control process in Fig. 5A is explained.

At the start of the process in Fig. 5A, an initial value of an image capturing condition (in this embodiment, the exposure time) for the first capturing of the original entire-area image is set and held in the image capturing condition storage unit 16 in advance.

In Fig. 5, first, an original entire-area image capturing process is performed in S21. In this process, a process to control the image capturing unit 11 to make it capture only the original entire-area image is performed by the order adjustment unit 17. In accordance with the control by the process, the image capturing unit 11 captures the observation image of the subject formed on the light-receiving surface by the optical system 10 under the image capturing condition held in the image capturing condition storage unit 16, and outputs the obtained original entire-area image It.

Next, an image signal recording process is performed in S22. In this process, a process in which the original entire-area image It output from the image capturing unit 11 is recorded by the frame memory A121 of the recording unit 12 is performed.

Next, a captured image display process is performed in S23. In this process, a process to read out the original entire-area image It recorded in the frame memory A121 of the recording unit 12 and to display and output the read-out original entire-area image It by the image output unit 13 as a screen such as the one illustrated in Fig. 6 is performed.

At this time, the user observes the displayed original entire-area image It, and determines whether or not exposure correction is required for the original entire-area image It. Here, when it is determined that the correction is required, the user inputs a corrected image capturing condition (in this embodiment, the exposure time) to the input unit 20, to instruct the image capturing apparatus to perform the exposure correction.

In the screen example in Fig. 6A, the original entire-area image It is displayed by the process in S23. In addition, in this screen example, it is displayed that the exposure time in the capture of the displayed original entire-area image It is "40" milliseconds.

The user observes the display of the original entire-area image It on the screen and determines whether or not exposure correction is required. When the user observes "white blow-out", "black out" and the like in the original entire-area image and determines that correction is required, the user inputs a value of the exposure time that is supposed to be more appropriate on the basis of the original entire-area image It and the value of the exposure time being displayed, to the input unit 20 as the corrected exposure condition. This input is the instruction to the image capturing apparatus for performing the exposure correction.

When it is determined that the exposure correction is not required, the user inputs the instruction for no correction to the input unit 20.

The explanation returns to Fig. 5A.

In S24, a process to determine whether or not the input content to the input unit 20 instructs the exposure correction or not is performed by the exposure control unit 15. Here, when the input content instructs the exposure correction (when the determination result is Yes), the process proceeds to S26, and when the input content instructs no exposure correction (when the decision result is No), the process proceeds to S25.

Next, in S25, a process to determine whether or not the input unit 20 has received input of an instruction for the termination of the image capturing from the user is performed by the order adjustment unit 17, Here, when it is determined that the input unit 20 has received input of an instruction for the termination of the image capturing (when the determination result is Yes), the process in Fig. 5A is terminated. On the other hand, when it is determined that the input unit 20 has not received input of an instruction for the termination of the image capturing (when the determination result is No), the process returns to S21, and the capturing process of the original entire-area image is performed again.

After that, until an instruction for the termination of the image capturing is input to the input unit 20, the determination result in S25 always becomes No, the processes from S21 to S23 are performed repeatedly, and the image output unit 13 displays and outputs the moving picture of the original entire-area image of the subject. Hereinafter, the display and output of the moving picture by the image output unit 13 is referred to as "live observation".

On the other hand, when the result of the determination process in S24 is Yes, an exposure correction process is performed in S26. In this process, a process to give the input value of the exposure time to the image capturing unit 11 to change the image capturing condition for the subsequent capture of the original entire-area image It is performed by the exposure control unit 15.

Next, in S27, an exposure condition storage process is performed. In this process, a process in which the corrected value of the exposure time input by the user to the input unit 20 is stored, updated and held in the image capturing condition storage unit 16 as the corrected image capturing condition is performed by the exposure control unit 15. Then, when the process in S27 is completed, the process returns to S21, and the capturing process of the original entire-area image is performed again.

The process described so far is the original entire-area image capturing control process in Fig. 5A.

Next, the image capturing mode switching control process in Fig. 5B is explained.

First, the user observes the original entire-area image obtained by the execution of the original entire-area image capturing control process described above. At this time, if neither "white blow-out" nor "black out" is observed in the original entire-area image, there is no need to generate the wide dynamic range image. On the other hand, if any "white blow-put" or "black out" appears in the original entire-area image no matter how the exposure correction described above is performed, a wide dynamic range image needs to be generated.

The user determines the whether or not a wide dynamic range image needs to be generated, on the basis of the observation of the original entire-area image as described above, and inputs the determination result to the input unit 20. If the input is to be performed using the screen in Fig. 6A, a selection instruction of a radio button display in the "SHOOTING MODE" field included in the screen may be given by the user by operating the mouse device and the like of the input unit 20. When it is determined that the generation of the wide dynamic range image is not required, an operation to select the radio button of the "ENTIRE-AREA IMAGE CAPTURING MODE" may be performed, and when it is determined the generation of the image is required, an operation to select the "WDR SYNTHESIZED IMAGE CAPTURING MODE" may be performed.

Meanwhile, in the following description, wide dynamic range is abbreviated as "WDR".

In Fig. 5B, first, in S11, a process to determine whether or not the input content to the input unit 20 is for instructing the generation of the WDR synthesized image is performed by the order adjustment unit 17. Here, if the input content instructs the generation of the WDR synthesized image (when the determination result is Yes), a WDR synthesized image capturing control process in S12 (Fig. 5C) is performed, and after that, the image capturingmode switching control process is terminated. On the other hand, when the input content instructs no generation of the WDR synthesized image (when the determination result is No), the original entire-area image capturing control process (Fig. 5A) described above is performed as the process in Fig. 13, and after that, the image capturing mode switching control process is terminated.

The process described so far is the image capturing mode switching control process in Fig. 5B.

Next, the WDR synthesized image capturing control process in Fig. 5C is explained.

First, in S30, the original entire-area image capturing control process (Fig. 5A) described above is performed. This results in a state in which the frame memory A121 of the recording unit 12 holds the original entire-area image It. However, in the captured image display process in S23, a process to display a display screen for obtaining the WDR image as illustrated in Fig. 6B by the image output unit 13 to output the original entire-area image is performed.

Next, in S31, a region of interest setting process is performed. In this process, a process to obtain the setting of a region of interest Rb for capturing the partial-area image by the user is performed by the partial-area extraction unit 14 through the input unit 20. Then, in the following step S32, a process to determine whether or not the setting of the region of interest has been completed is performed by the partial area extraction unit 14.

The screen example in Fig. 6B illustrates the situation in which the user is operating the mouse device and the like of the input unit 20 to perform the setting of a rectangle region of interest Rb in the original entire-area image It. The position and the shape of the displayed rectangle change in accordance with the operation of the input unit 20 by the user. After that, when the instruction for the completion of the region of interest Rb is given from the user to the input unit 20, the partial-area extraction unit 14 obtains shape information of the region of interest Rb and the position information of the region of interest Rb in the original entire-area image It at the time when the instruction is issued, as the parameter of the region of interest Rb.

Meanwhile, the shape of the region of interest Rb is not limited to rectangle, and may be any shape.

When it is determined, in the determination process in S32 in Fig. 5C, that an instruction for the completion of the setting of the region of interest has been obtained (the determination result is Yes), the process proceeds to S33. On the other hand, when it is determined that an instruction for the completion of the setting of the region of interest has not been obtained (when the determination result is No), the process returns to S32 and the execution of the region of interest setting process is continued.

Next, in S33, an exposure time setting process is performed. In this process, a process to set the exposure time T2 in the capture of the partial-area image of the region of interest Rb is performed by the exposure control unit 15.

In this embodiment, the exposure control unit 15 performs the setting of the exposure time T2 in the capturing of the partial-area image by calculating the value of the equation below.

$$T2 = T1/K$$

In this equation, T1 is the exposure time in the capture of the original entire-area image It, and is held in the frame memory A121 of the recording unit 12 by the execution of the original entire-area image capturing control process in S30. Meanwhile, K is the ratio of the image capturing times of the original entire-area image It and the partial-area image, and is a predetermined constant in this embodiment. The configuration may also be made so that the user can set the value of the image capturing time ratio K arbitrarily.

In the screen example in Fig. 6B, the exposure time T1 in the capture of the displayed original entire-area image It is 40 milliseconds, and the image capturing time ratio K is "4". At this time, the value of the exposure time T2 in the capturing of the partial-area image is set to 40/4=10, that is, 10 milliseconds.

Next, in S34, a process to determine whether or not the setting of the exposure time has been completed or not is performed by the exposure control unit 15. Here, when it is determined the setting of the exposure time has been completed (when the determination result is Yes), the process proceeds to S35. On the other hand, when it is determined that the setting has not been completed (when the determination result is No), the process returns to S33 and the execution of the exposure time setting process is continued.

Next, in S35, a threshold setting process is performed. In this process, a process to obtain the setting of a threshold value for determining which group of pixels in the region of interest Rb in the original entire-area image It is to be replaced with the one obtained from the partial-area image is performed by the synthesizing unit 19. In this embodiment, a luminance value of the pixel is set as the threshold value.

The screen example in Fig. 6B illustrates the state in which the user operated the keyboard device and the like of the input unit 20 and set the threshold value of the luminance value to "250-255". This is the case in which the user intends to replace only pixels that are blown out to white in the region of interest Rb. The synthesizing unit 19 obtains the set value as the threshold value by the execution of the threshold setting process.

Next, in S36, a process to determine whether or not the setting of the luminance threshold value has been completed is performed by the synthesizing unit 19. Here, when it is determined that the setting of the luminance threshold value has been completed (when the determination result is Yes), the process proceeds to S37. On the other hand, when it is determined that the setting has not been completed (when the determination result is No), the process returns to S35 and the execution of the threshold value setting process is continued.

Next, in S37, an image capturing condition storage process is performed. Here, a process is performed to make the image capturing condition storage unit 16 store and hold the parameters of the region of interest Rb obtained by the partial-area extraction unit 14 by the process in S31 and the exposure time T2 set by the exposure control unit 15 by the process in S33 as the image capturing conditions of the partial-area image.

Next, in S38, a WDR image synthesis control process (Fig. 5D) is performed. While the details of the process are described later, the WDR image is displayed and output by the image output unit 13 by executing this process.

Here, the user observes the display of the WDR image, and determines whether or not the setting change of the image capturing conditions (parameters of the region of interest Rb and the exposure time T2 described above. Here, if the user determines that a setting change of the image capturing conditions is required as, for example, "white blow-out" or "black out" is observed in the WDR image, the user inputs an instruction about the setting of the image capturing conditions after the change, to the input unit 20.

In S39, a process to determine whether or not the instruction about the setting change of the image capturing conditions has been input to the input unit 20 is performed by the order adjustment unit 17. Here, when it is determined that the instruction about the setting change of the image capturing conditions has been input (when the determination result is Yes), the process returns to S31 and the process described above is performed again. On the other hand, when it is determined that the instruction about the setting change of the image capturing conditions has not been input (the determination result is No), the process proceeds to S40.

Next, in S40, a process to determine whether or not the input unit 20 has received input of an instruction for the termination of the image capturing from the user is performed by the order adjustment unit 17. Here, when it is determined that the input unit 20 has received input of an instruction for the termination of the image capturing (when the determination result is Yes), the process in Fig. 5C is terminated. On the other hand, when it is determined that the input unit 20 has not received input of an instruction for the termination of the image capturing (when the determination result is No), the process returns to S38, and the WDR image synthesis control process is performed again.

After that, until the instruction for the termination of the image capturing is input to the input unit 20, since the determination result in S40 always becomes No, the WDR image synthesis control process in S38 is executed repeatedly, and the live observation of the WDR image of the subj ect is performed.

The process described so far is the WDR synthesized image capturing control process in Fig. 5C.

Next, the WDR image synthesis control process in Fig. 5D that corresponds to the process in S38 in Fig. 5C is explained.

At the start of this process, the image capturing condition storage unit 16 is holding image capturing conditions JT (the parameters and the exposure time T1 of the original entire-area image It) stored in the process in S30 and image capturing conditions JB (the parameters and the exposure time T2 of the region of interest Rb) stored in the process in S37.

First, in S41, an original entire-area image capturing process is performed. In this process, a process to control the image capturing unit 11 to make it capture the original entire-area image is performed by the order adjustment unit 17. In accordance with the control by the process, the image capturing unit 11 captures the observation image of the subject formed on the light-receiving surface by the optical system 10 under the image capturing conditions JT held in the image capturing condition storage unit 16, and outputs the obtained original entire-area image It. The output original entire-area image It is stored in the frame memory A121 of the recording unit 12.

Next, in S42, a partial-area image capturing process is performed. In this process, a process to control the image capturing unit 11 to make it capture the partial-area image is performed by the order adjustment unit 17. In accordance with the control by the process, the image capturing unit 11 captures a part of the observation image of the subject formed on the light-receiving surface by the optical system 10 under the image capturing conditions JB held in the image capturing condition storage unit 16, and outputs the obtained original entire-area image Ib. The output original entire-area image Ib is stored in the frame memory B122 of the recording unit 12.

Next, in S43, an image synthesis process is performed by the synthesizing unit 19, and in the following S44, an image output process to display and output the WDR image generated by the image synthesis process as the screen as illustrated in Fig. 6B is performed. After that, the process in Fig. 5D is terminated.

Here, the image synthesis process in S43 performed by the synthesizing unit 19 is explained with reference to Fig. 7.

In this image synthesis process, first, a detection unit A191 (first detection unit) reads out the original entire-area image It recorded in the frame memory A121. Next, pixels whose luminance value exceeds a predetermined threshold value (in the screen example in Fig. 6B, "250-255") in the pixels constituting the original entire-area image It are detected from the region of interest Rb in the original entire-area image It. Then, an area X (replacement-target area) consisting of the detected pixels is extracted from the region of interest Rb in the original entire-area image It, to separate the original entire-area image It into the area X and an area X- other than the area X. According to the screen example in Fig. 6B, the area X- obtained as described above becomes an area that consists of the area other than the region of interest Rb in the original entire-area image It, and the area of the pixels whose luminance value is below 250 in the region of interest Rb.

Next, a detection unit B192 (second detection unit) first reads out the partial-area image Ib recorded in the frame memory B122. Next, using the value of the image capturing time ratio K used for the setting of the exposure time T2 in the exposure control unit 15, the lower-limit value of the threshold value of the luminance value is divided by the image capturing time ratio K. Then, pixels of which pixel values are equal to or above the value obtained by the division area detected from the partial-area image Ib, and an area Y consisting of the group of the detected pixels is extracted from the partial-area image Ib.

For example, in the screen example in Fig. 6B, the threshold value of the luminance value is set as "250-255", so its lower-limit value is 250. Meanwhile, the image capturing time ratio K is "4". Therefore, in this case, the value obtained by dividing the lower-limit value of the threshold value of the luminance value described above by the image capturing time ratio K is 250/4=62.5. Accordingly, in this case, pixels whose luminance value is equal to or above 63 are detected from the partial-area image Ib, and the area Y consisting of the group of the detected pixels is extracted from the partial-area image Ib. As described above, the detection unit B192 detects the area Y (replacement area) that is estimated as corresponding to the area X (replacement-target area) from the partial-area image Ib.

In Fig. 7, " (a) CAPTURED IMAGE" illustrates the situation in which the areas X and X- are obtained from the original entire-area image It the area Y is obtained from the partial-area image Ib as described above.

Next, an image joining unit 194 performs an image synthesis process to replace the picture in the area X in the original entire-area image It with the picture in the area Y in the partial-area image Ib, to join the picture in the area X- in the original entire-area image It with the picture in the area Y. The WDR image is generated as described above.

Meanwhile, at this time, the luminance value of each pixel in the area Y may be multiplied by the image capturing time ratio K, to compensate for the difference in sensitivity in the capture of the picture in the area X- and the picture in the area Y.

Meanwhile, in the synthesized image in which the picture in the area X- and the picture in the area Y are joined, the borderline between the area X- and the area Y may stand out. In such a case, respective pixels in the area around the border in the original entire-area image It and in the partial-area image may be overlapped while giving weighting to the luminance value and maybe joined by overlaying them on each other, to generate an image in which the border part is smoothed. The method for overlaying and overlapping two images with each other while giving weighting is introduced in the above-mentioned document, that is, the Japanese Laid-open Patent Publication No. 6-141229, for example.

Meanwhile, the shapes of the area Y detected by the detection unit B192 and the area X detected by the detection unit A191 may differ significantly. A pattern matching unit 193 changes the shape of the picture in the area Y to match the shape to the area X in such a case.

Meanwhile, as the method of the pattern matching performed by the pattern matching unit 193, various known methods may be adopted. For example, the contour of the area X and the contour of the area Y are extracted, and the correspondence relationship is obtained for associating each feature point on the contour of the area Y with each correspondent point on the contour of the area X. Then, affine conversion is performed for the picture in the area Y so as to obtain the obtained correspondence relationship, to match its shape to the area X.

In the following description, the image obtained by processing the picture in the area Y by the pattern matching unit 193 is referred to as the "picture of the area Z." In Fig. 7, "(b) PATTERN MATCHING" illustrates that the area Z is obtained as described above.

In the case in which the picture of the area Z is generated by the pattern patching unit 193, the image joining unit 194 performs a process to replace the picture in the area X in the original entire-area image It with the picture of the area X, to join the picture of the area X- in the original entire-area image It with the picture of the area Z. The WDR image is generated as described above. In Fig. 7, "(c) SYNTHESIZED IMAGE" illustrates the WDR image is obtained as described above.

Meanwhile, in the WDR synthesized image capturing control process in Fig. 5D, the WDR image is generated by synthesizing the original entire-area image It

and the partial-area image Ib captured following the original entire-area image It. It is also possible, together with the generation of the WDR image in that way, to further perform the generation of the WDR image by synthesizing a partial-area image Ib and an original entire-area image It captured following the partial-area image Ib. Accordingly, a synthesized image is generated every time either of the original entire-area image It and the partial-area image Ib is captured, and practically, the WDR image for one frame is generated from captured images for one frame.

As described above, according to the image capturing apparatus, the original entire-area image It and the partial-area image Rb are captured alternately under different image capturing conditions (exposure time), and the WDR image can be generated on the basis of the obtained original entire-area image It and the partial-area image Rb. Accordingly, since the time required from the image capturing to the generation of the WDR image is shorter than the time required conventionally, the frame rate in the generation of the WDR image can be improved.

Meanwhile, in the image capturing apparatus, the setting of the exposure time for the original entire-area image It and the partial-area image Ib is performed by the user. Alternatively, the automatic exposure (AE) control function that is broadly know may be installed to perform the setting of an appropriate exposure time for the capture of the original entire-area image It and the partial-area image Ib.

In addition, while the setting of the region of interest Rb that defines the capturing range of the partial-area image is performed by the user in the image capturing apparatus, the configuration can also be made so that the image capturing apparatus itself performs the setting of the region of interest Rb. Accordingly, since there is no need for the operation to set the region of interest Rb, the work load for the user is reduced.

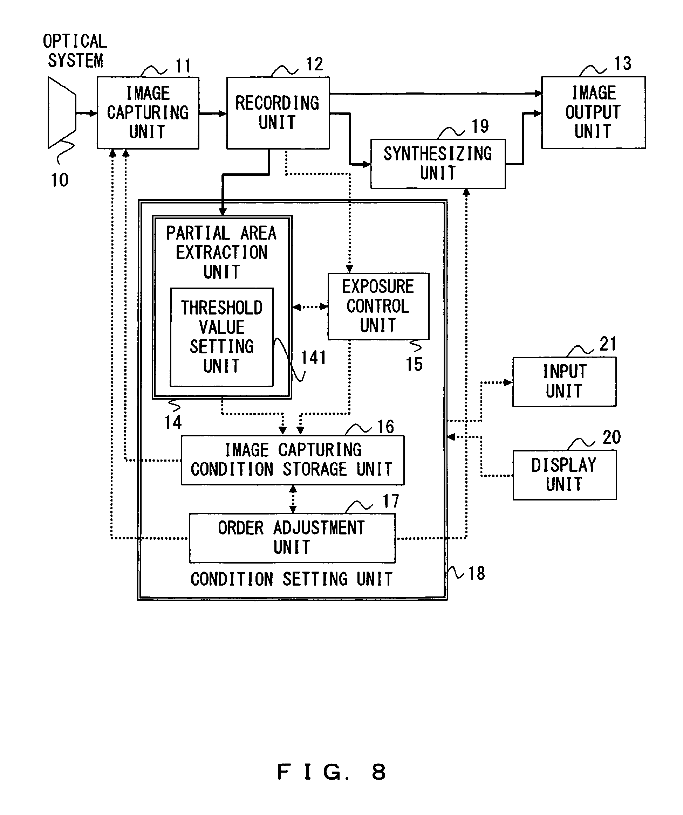

Fig. 8 is explained here. Fig. 8 illustrates a second example of the configuration of an image capturing apparatus for a microscope that is an image obtaining apparatus with which the present invention is implemented.

In Fig. 8, the same reference numbers are assigned to the constituent elements that have the same functions as those in the first example illustrated in Fig. 1. Since these constituent elements have already been explained, detail description is omitted here.

The configuration of Fig. 8 differs from the configuration of Fig. 1 only in that a threshold setting unit 141 is particularly provided in the partial area extraction unit 14. The image capturing apparatus for a microscope in Fig. 8 can be implemented in the microscope system illustrated in Fig. 2, of course.

The threshold setting unit 141 sets a region of interest from the original entire-area image recorded in the recording unit 12 on the basis of the threshold input to the input unit 20. The partial-area extraction unit 14 extracts the region of interest set by the threshold setting unit 141.

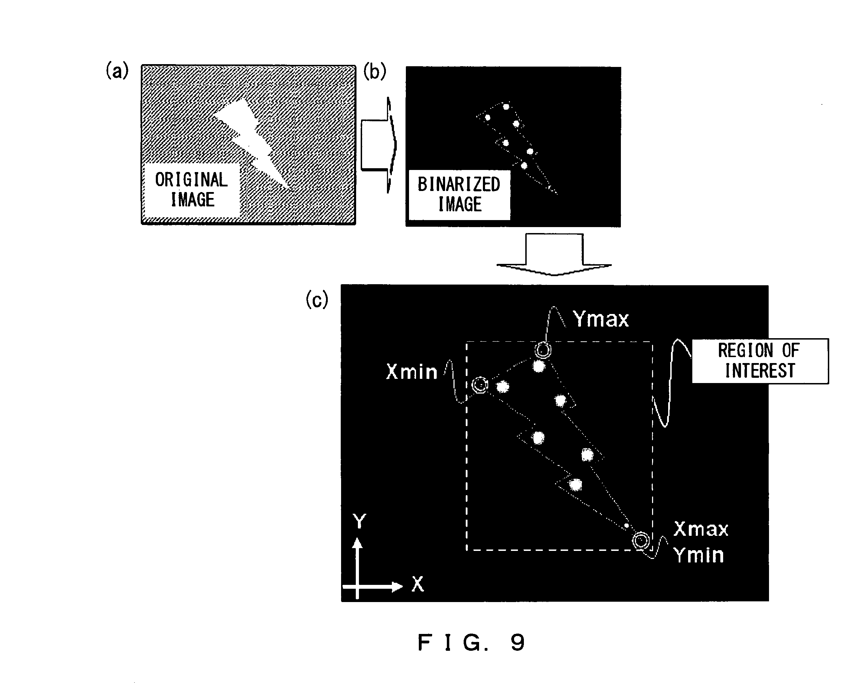

The method of setting the region of interest on the basis of the threshold value by the threshold value setting unit 141 is explained with reference to Fig. 9.

First, the user inputs a threshold value that is the basis for setting the region of interest by operating the keyboard and the like of the input unit 20. Upon receiving the threshold value from the input unit 20, the threshold setting unit 141 reads out the original entire-area image It recorded in the frame memory A121 of the recording unit 12, and binarizes the luminance value of each pixel constituting the original entire-area image It, with the input threshold value as the reference value.

In Fig. 9, the image (a) is an example of the original entire-area image It, and the image (b) is an example of the biniarized image of the image (a). The binarized image example presents the pixels of which luminance value is equal to or above the threshold value with the white color, and the pixels of which luminance value is below the threshold value with the black color.

If the luminance value of all the pixels constituting the original entire-area image It is below the threshold value received from the input unit 20, the threshold value setting unit 141 changes the threshold value, to set the value as the maximum luminance value for the luminance value of the respective pixels constituting the original entire-area image It.

In addition, in the case in which the threshold value setting unit 141 performs such change of the threshold value, the threshold value setting unit 141 performs the generation of the binarized image of the original entire-area image It using the threshold value after the change, and also notifies the user of the change by making the display unit 21 display the threshold value after the change.

Next, the threshold value setting unit 141 obtains coordinates (XY orthogonal two-dimensional coordinates) that specifies the position on the original entire-area image of the respective pixels whose luminance value is equal to or above the threshold value in the binarized original entire-area image It on the basis of the threshold value. Next, in the obtained coordinates for the respective pixels, the maximum value and the minimum value are obtained respectively for the X coordinate and the Y coordinate. Then, a rectangle is obtained with the obtained maximum values and the minimum values of the X coordinate and the Y coordinate as the vertices. Then, the obtained rectangle includes all the pixels whose luminance value is equal to or above the threshold value in the original entire-area image It. The threshold setting unit 141 sets the rectangle obtained as descried above as the region of interest. Fig. 9(c) displays the region of interest set as described above on the binarized original entire-area image.

Meanwhile, of the pixels whose luminance value is equal to or above the threshold value in the binarized image of the original entire-area image, one isolated from other pixels whose luminance value is equal to or above the threshold value, or an area formed by such pixels adjacent to each other being a smaller area than a predetermined value, can be estimated as a noise. Therefore, the rectangle to be the region of interest may be obtained while excluding such pixels.

In addition, apart from that, in the binarized image of the original entire-area image It, the region of interest may be set so as to include all pixels within a predetermined distance (the distance may be set by the user) from the pixels whose luminance value is equal to or above the threshold value.

Meanwhile, while each image capturing apparatus for a microscope described above generates the WDR image using one piece of the partial-area image Ib for one piece of the original entire-area image It, the WDR image may be generated by using a plurality of pieces of the partial-area image Ib for one piece of the original entire-area image It.

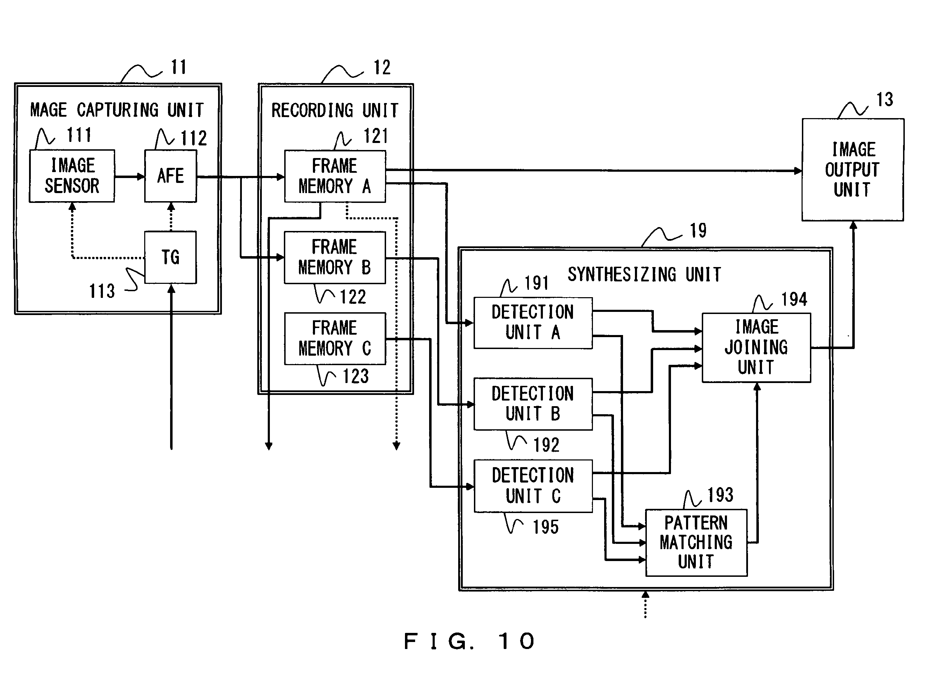

Fig. 10 is explained. Fig. 10 illustrates a variation example of the configuration of the image capturing apparatus for a microscope illustrated in Fig. 1 and Fig. 8, which is a configuration example in a case inwhich the WDR image is generated using two pieces of the partial-area image for one piece of the original entire-area image.

Fig. 10 omits the drawing of the optical system 10, the condition setting unit 18, the input unit 20, and the display unit 21 that are the same constituent elements as the ones illustrated in Fig. 1 and Fig. 8. In addition, the same reference numbers are assigned to the constituent elements that have the same functions as those in the first example illustrated in Fig. 1 and Fig. 8. As these constituent elements have already been described, detail description for them is omitted here, and different functions are mainly explained.

The configuration of Fig. 10 differs from the configurations of Fig. 1 and Fig. 8 only in that a frame memory C123 is further provided in the recording unit 12, and a detection unit C195 is provided in the synthesizing unit 19. The image capturing apparatus for a microscope in Fig. 10 can be implemented in the microscope system illustrated in Fig. 2, of course.

In Fig. 10, the frame memory C123 records a partial-area image of an observation image for a region of interest that is different from that recorded in the frame memory B122.

In the following description, the one recorded in the frame memory B122 is referred to as a partial-area image Ib1 and the one recorded in the frame memory C123 is referred to as a partial-area image Ib2, to facilitate the distinction between them.

The detection unit C195 (third detection unit) detects an area Yb whose luminance value is estimated to exceed the threshold value in the original entire-area image on the basis of the image capturing time ratio K described above, from the partial-area image Ib2 recorded in the frame memory C123.

The detection unit B192 detects an area Ya of which luminance value is estimated to exceed the threshold value in the original entire-area image on the basis of the image capturing time ratio K described above, from the partial-area image Ib1 recorded in the frame memory C123.

In the image capturing apparatus in Fig. 10, in a similar manner as those illustrated in Fig. 1 and Fig. 8, the WDR image is generated by the execution of the respective control processes in Fig. 5A, Fig. 5B and Fig. 5D. However, in the partial-area image capturing process in S42 in Fig. 5D, the capturing condition (third exposure condition) of the partial-area image Ib2 is sent to the TG 113 by the order adjustment unit 17 following the sending the capturing condition (second exposure condition) of the partial-area image Ib1. When the TG 113 receives the second exposure condition, the TG 113 sets the exposure condition to the second exposure condition, and then controls the image sensor 111 to make it capture the partial-area image Ib1. When the TG 113 receives the third exposure condition, the TG 113 sets the exposure condition to the third exposure condition, and then controls the image sensor 111 to capture the partial-area image Ib2.

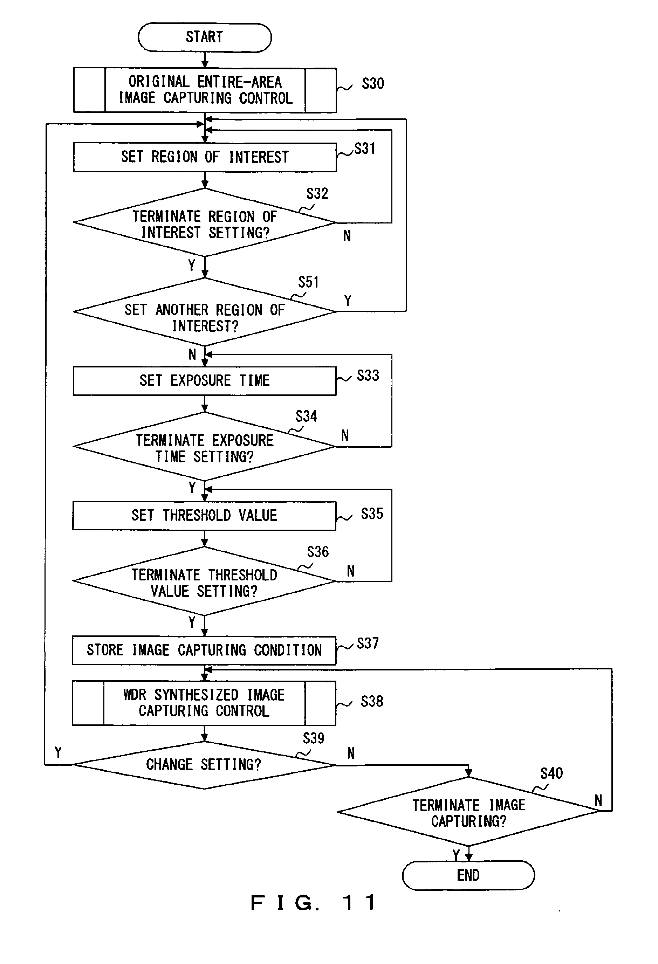

In addition, in the image capturing apparatus in Fig. 10, for the WDR image capturing control process, the process in a second example illustrated in Fig. 11 is performed instead of the first example illustrated in Fig. 5C.

The process details of the second example of the wide dynamic range image capturing control process illustrated as a flowchart in Fig. 11 are explained.

In Fig. 11, the same reference numbers are assigned to the process steps in which the same processes are performed as in the first example illustrated in Fig. 5C. As these process steps have already been described, detail description for them is omitted here, and different process details are mainly explained.

The flowchart in Fig. 11 differs from the flowchart in Fig. 5D in that when the determination result in S32 is Yes, the process of S51 is performed instead of the process of S33.

In S51, following the process in S31 preformed earlier, a process is performed, by the partial area extraction unit 14, to determine whether or not the input unit 20 has obtained an instruction from the user for further performing the setting of the region of interest. Here, when it is determined that an instruction for further performing the setting of the region of interest has been obtained (when the determination result is Yes), the process returns to S31, and the region of interest setting process is performed again. On the other hand, when it is determined that an instruction for further performing the setting of the region of interest is not to be obtained (when an instruction that the setting of the region of interest is not to be performed any more has been obtained) (when the determination result is Yes), the process proceeds to S33.

By repeating the region of interest setting process in S31, the partial-area extraction unit 14 obtains the shape information of the regions of interest Rb1 and Rb2, and the position information in the original entire-area image It of the regions of interest Rb1 and Rb2, are the respective parameters of the regions of interest Rb1 and Rb2.

Meanwhile, in the image capturing condition storage process in S37, a process is performed to store the parameters of the regions of interest Rb1 and Rb2 obtained in the process of S31 and the exposure time T2 set in the process of S33 in the image capturing condition storage unit 16 as the image capturing conditions of the partial-area image Ib1 and the partial-area image Ib2, respectively.

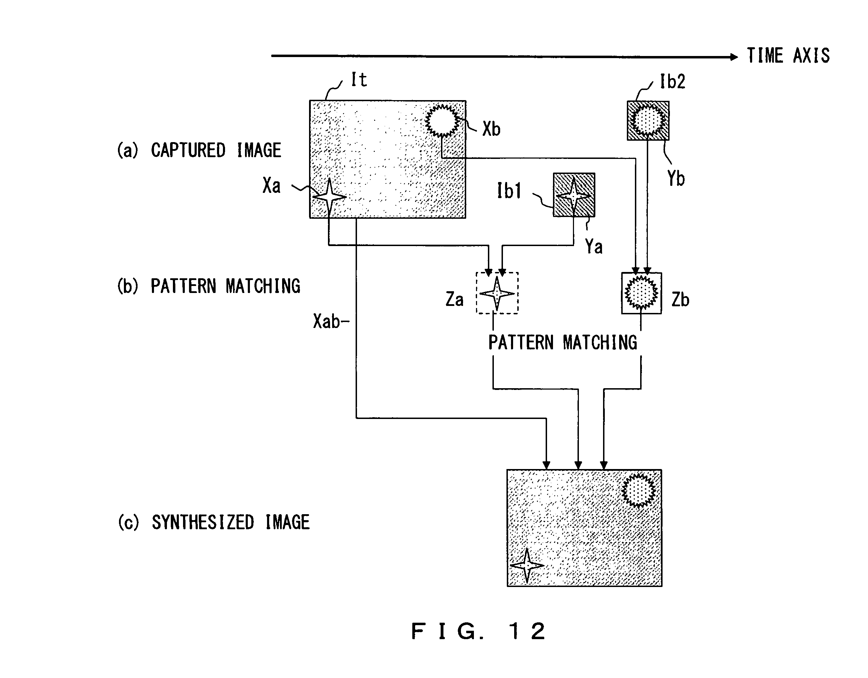

Next, the image synthesis process in S43 in Fig. 5D performed by the synthesizing unit 19 in the image capturing apparatus for a microscope having the configuration illustrated in Fig. 10 is explained with reference to Fig. 12. This image synthesis process is for obtaining one piece of entire-area image (WDR image) having a wider dynamic range than that of the original entire-area image It, by synthesizing the original entire-area image It and two pieces of partial-area images Ib1 and Ib2.

In Fig. 12, "(a) CAPTURED IMAGE" illustrates that the original entire-area image It, the partial-area image Ib1 and the partial-area image Ib2 are captured in this order.

The image joining unit 194 replaces the picture in the area Xa and the picture in Xb in the original entire-area image It with the picture in the area Ya in the partial-area image Ib1 and the area Yb in the partial-area image Ib2, respectively. Then, an image synthesis process is performed to join the picture in the area Xab- in the original entire-area image It (the picture other than the area Xa and other than the area Xb in the original entire-area image It) with the picture in the area Ya and the picture in the area Yb. The WDR image is generated as described above.

Meanwhile, the shapes of the area Ya detected by the detection unit B192 and the area Xa detected by the detection unit A191 may differ significantly, or the shapes of the area Yb detected by the detection unit C195 and the area Xb detected by the detection unit A191 may differ significantly. The pattern matching unit 193 changes the shape of the picture in the area Ya or Yb to match the shape to the area Xa or Xb in such a case. The method of the pattern matching performed by the pattern matching unit 193 at this time may be the same method as in the image capturing apparatus for a microscope in Fig. 1 and Fig. 8.

The images obtained by processing the pictures in the areas Ya and Yb by the pattern matching unit 193 are referred to as the "picture of the area Za" and the "picture in the area Zb", respectively. In Fig. 12, "(b) pattern matching" illustrates that the areas Za and Zb are obtained as described above.

In the case in which the picture of the area Za is generated by the pattern matching unit 193, the image joining unit 194 replaces the picture in the area Xa in the original entire-area image It with the picture of the area Za and joins them. Meanwhile, in the case in which the picture of the area Zb is generated by the pattern matching unit 193, the image joining unit 194 replaces the picture in the area Xb in the original entire-area image It with the picture of the area Zb and joins them. As described above, an image synthesis process is performed to join the picture in the area Xab- in the original entire-area image It and the pictures of the areas Za and Zb. The WDR image is generated as described above. In Fig. 12, "(c) SYNTHESIZED IMAGE" illustrates that the WDR image is obtained as described above.

As described above, in the image capturing apparatus for a microscope in Fig. 10, one piece of synthesized image can be generated from an original entire-area image and a plurality of pieces of partial-area images captured by specifying a plurality of regions of interest.

The present invention is not limited to the embodiments explained above, and at the implementation level, various modifications can be made without departing from its scope.

**Claims**

1. An image obtaining apparatus (2, 3) comprising:

an image sensor (11) configured to capture an observation image formed on a light-receiving surface;
original entire-area image capturing control means (17) configured to control the image sensor (11) under a first exposure condition to make the image sensor (11) capture an original entire-area image (It) being a picture of the observation image for an entire area of the light-receiving surface;
partial-area image capturing control means (17) configured to control the image sensor (11) under a second exposure condition being different from the first exposure condition to make the image sensor (11) capture a partial-area image (Ib) being a picture of the observation image formed on the light-receiving surface; and
synthesizing means (19) comprising
first detection means (191) configured to detect, from the original entire-area image (It), a replacement-target area (X) consisting of a group of pixels whose luminance value exceeds a predetermined threshold value in pixels constituting the original entire-area image (It);
second detection means (192) configured to detect a replacement area (Y) estimated to correspond to the replacement-target area (X) from the partial-area image (Ib), the replacement area (Y) being estimated to exceed the threshold value in the original entire-area image (It) on the basis of a ratio of exposure times for the original entire-area image (It) and the partial-area image (Ib); and
image joining means (194) configured to replace a picture in the replacement-target area (X) in the original entire-area image (It) with a picture in the replacement area (Y) in the partial-area image (Ib) to join a picture in an area other than the replacement-target area (X-) in the original entire-area image (It) and a picture in the replacement area (Y) in the partial-area image (Ib) to obtain an entire-area image having a wider dynamic range than the original entire-area image (It),

**characterized by**

an input unit (20) configured to obtain from a user of the image obtaining apparatus (2, 3) an input of information which specifies a region of interest (Rb) of a partial area in the observation image reflected onto an entire-area image (It), wherein
the information which specifies a region of interest (Rb) indicates a threshold of a luminance value of a pixel constituting the original entire-area image (It), the image obtaining apparatus (2, 3) further comprising
region of interest setting means (14) configured to set, in the original entire-area image (It), a region of interest (Rb) that includes all pixels having a luminance value equal to or above the threshold value indicated by the information which specifies a region of interest (Rb) in pixels constituting the original entire-area image (It), wherein
the region of interest setting means (14) obtains, about each of the pixels having a luminance value equal to or above the predetermined threshold value, XY orthogonal two-dimensional coordinates representing position of the pixels on the entire-area image; obtains maximum value and minimum value for X coordinates and Y coordinates in obtained coordinates of the pixels; and sets a rectangle having obtained maximum value and minimum value of the X coordinates and the Y coordinates as the region of interest (Rb) in the original entire-area image (It), wherein
the partial-area image (Ib) is a picture of the observation image for only a partial area of the light-receiving surface and the partial-area image (Ib) is a picture of the region of interest (Rb) specified by the information obtained by the input unit (20).

2. The image obtaining apparatus (2, 3) according to claim 1, wherein

the synthesizing means (19) further comprises shape changing means (193) configured to change a shape of the picture in the replacement area (Y) to match shapes of contours of the replacement area (Y) and the replacement-target area (X), and the image joining means (194) replaces a picture in the replacement-target area (X) in the original entire-area image (X) with a picture in the replacement area after shape change (Z) by the shape changing means (193) in the partial-area image (Ib), to join a picture in an area other than the replacement-target area (X-) in the original entire-area image (It) and the picture in the replacement area after shape change (Z) by the shape changing means (193) in the partial-area image (Ib).

3. The image obtaining apparatus (2, 3) according to one of claims 1 or 2, further comprising exposure control means (15) configured to set, when the original entire-area image (It) capturing control means (17) makes the image sensor (11) capture the original entire-area image (It), an exposure condition in the capture to the first exposure condition and configured to set, when the partial-area image capturing control means (17) makes the image sensor (11) capture the partial-area image (Ib), an exposure condition in the capture to the second exposure condition.

4. The image obtaining apparatus (2, 3) according to one of claims 1 through 3, wherein the partial-area image capturing control means (17) makes the image sensor (11) capture a plurality of the partial-area image (Ib1, Ib2), and the synthesizing means (19) obtains one piece of entire-area image having a wider dynamic range than the original entire-area image (It) by synthesizing the original entire-area image (It) and a plurality of the partial area image (Ib1, Ib2).

5. An image synthesis method comprising:

   detecting, from an original entire-area image (It) captured by an image sensor (11) under a first exposure condition being a picture of an observation image formed on a light-receiving surface of the image sensor (11) and being a picture of the observation image for an entire area of the light-receiving surface of the image sensor (11), a replacement-target area (X) consisting of a group of pixels having a luminance value exceeding a predetermined threshold value in pixels constituting the original entire-area image (It);
   detecting, from a partial-area image (Ib) captured by the image sensor (11) under a second exposure condition, which is different from the first exposure condition, being a picture of an observation image formed on a light-receiving surface of the image sensor (11), a replacement area (Y) estimated to correspond to the replacement-target area (X), the replacement area (Y) being estimated to exceed the threshold value in the original entire-area image (It) on the basis of a ratio of exposure times for the original entire-area image (It) and the partial-area image (Ib); and
   performing an image processing to replace a picture in the replacement-target area (X) in the original entire-area image (It) with a picture in the replacement area (Y) in the partial-area image (Ib) to join the picture in an area other than the replacement-target area (X-) in the original entire-area image (It) and a picture in the replacement area (Y) in the partial-area image (Ib),
   **characterized by**
   obtaining, from a user, an input of information which specifies a region of interest (Rb) of partial area in the observation image reflected onto an entire-area image, wherein the information which specifies a region of interest (Rb) indicates a threshold of a luminance value of a pixel constituting the original entire-area image (It), and a region of interest (Rb) is set, in the original entire-area image (It), as a region of interest (Rb) that includes all pixels having a luminance value equal to or above the threshold value indicated by the information which specifies a region of interest (Rb) in pixels constituting the original entire-area image (It), wherein setting the region of interest (Rb) includes obtaining, about each of the pixels having a luminance value equal to or above the predetermined threshold value, XY orthogonal two-dimensional coordinates representing position of the pixels on the entire-area image; obtaining maximum value and minimum value for X coordinates and Y coordinates in obtained coordinates of the pixels; and setting a rectangle having obtained maximum value and minimum value of the X coordinates and the Y coordinates as the region of interest (Rb) in the original entire-area image (It),
   wherein
   the partial-area image (Ib) is a picture of the observation image for only a partial area of the light-receiving surface of the image sensor (11) and the partial-area image (Ib) is a picture of the region of interest (Rb) specified by the information which specifies the region of interest (Rb).

6. The image synthesis method according to claim 5, further comprising changing a shape of the picture in the replacement area (Y) to match shapes of contours of the replacement area (Y) and the replacement-target area (X), wherein

in the image processing, an image processing is performed to replace a picture in the replacement-target area (X) in the original entire-area image (It) with the picture in the replacement area after the changing (Z) in the partial-area image (Ib), to join a picture in an area other than the replacement-target area (X-) in the original entire-area image (It) and a picture in the replacement area after the changing (Z) in the partial-area image (Ib).

7. A microscope system comprising a microscope (1) obtaining a microscopic observation image of a sample and the image obtaining apparatus (2, 3) according to one of claims 1 through 4 obtaining a picture of the microscopic observation image.

**Patentansprüche**

1. Bilderfassungsvorrichtung (2, 3) umfassend:

einen Bildsensor (11), der dazu eingerichtet ist, ein Beobachtungsbild zu erfassen, das auf einer lichtempfangenden Oberfläche gebildet ist; ein Steuermittel zum Erfassen eines originalen Vollbereichsbilds (17), das dazu eingerichtet ist, den Bildsensor (11) unter einer ersten Belichtungsbedingung zu steuern, um den Bildsensor (11) ein originales Vollbereichsbild (It) erfassen zu lassen, welches ein Bild des Beobachtungsbilds für einen vollen Bereich der lichtempfangenden Oberfläche ist; ein Steuermittel zum Erfassen eines Teilbereichsbilds (17), das dazu eingerichtet ist, den Bildsensor (11) unter einer zweiten Belichtungsbedingung, die von der ersten Belichtungsbedingung verschieden ist, zu steuern, um den Bildsensor (11) ein Teilbereichsbild (Ib) erfassen zu lassen, welches ein Bild des Beobachtungsbilds ist, das auf der lichtempfangenden Oberfläche gebildet ist; und ein Synthesemittel (19) umfassend:

ein erstes Erkennungsmittel (191), das dazu eingerichtet ist, aus dem originalen Vollbereichsbild (It) einen Ersetzungszielbereich (X) zu erkennen, der aus einer Gruppe von Pixeln besteht, deren Helligkeitswert einen vorbestimmten Schwellenwert in den Pixeln übersteigt, die das originale Vollbereichsbild (It) bilden; ein zweites Erkennungsmittel (192), das dazu eingerichtet ist, aus dem Teilbereichsbild (Ib) einen Ersetzungsbereich (Y) zu erkennen, der geschätzt wird, um dem Ersetzungszielbereich (X) zu entsprechen, wobei der Ersetzungsbereich (Y) auf der Basis eines Verhältnisses der Belichtungszeiten für das originale Vollbereichsbild (It) und das Teilbereichsbild (Ib) geschätzt wird, um den Schwellenwert in dem originalen Vollbereichsbild (It) zu übersteigen; und ein Bildvereinigungsmittel (194), das dazu eingerichtet ist, ein Bild in dem Ersetzungszielbereich (X) in dem originalen Vollbereichsbild (It) mit einem Bild in dem Ersetzungsbereich (Y) in dem Teilbereichsbild (Ib) zu ersetzen, um ein Bild in einem anderen Bereich als dem Ersetzungszielbereich (X-) in dem originalen Vollbereichsbild (It) und ein Bild in dem Ersetzungsbereich (Y) in dem Teilbereichsbild (Ib) miteinander zu vereinigen, um ein Vollbereichsbild zu erhalten, das einen weiteren dynamischen Bereich als das originale Vollbereichsbild (It) aufweist,

**gekennzeichnet durch**,

eine Eingabeeinheit (20), die dazu eingerichtet ist, von einem Benutzer der Bilderfassungsvorrichtung (2, 3) eine Eingabe von Daten zu erhalten, die einen Bereich von Interesse (Rb) von einem Teilbereich in dem Beobachtungsbild spezifizieren, das auf ein Vollbereichsbild (It) reflektiert wird, wobei die Daten, die einen Bereich von Interesse (Rb) spezifizieren, einen Schwellenwert eines Helligkeitswerts von einem Pixel angeben, der das originale Vollbereichsbild (It) bildet, wobei die Bilderfassungseinrichtung (2, 3) ferner umfasst:

ein Mittel zum Setzen eines Bereichs von Interesse (14), das dazu eingerichtet ist, in dem originalen Vollbereichsbild (It) einen Bereich von Interesse (Rb) zu setzen, der alle Pixel in den Pixeln, die das originale Vollbereichsbild (It) bilden, umfasst, die einen Helligkeitswert gleich oder oberhalb des Schwellenwertes aufweisen, der **durch** die Daten angegeben ist, die einen Bereich von Interesse (Rb) spezifizieren, wobei das Mittel zum Setzen eines Bereichs von Interesse (14) über jeden der Pixel, der einen Helligkeitswert gleich oder oberhalb des vorbestimmten Schwellenwertes aufweist, XY orthogonale zweidimensionale Koordinaten erhält, die die Position der Pixel auf dem Vollbereichsbild repräsentieren, Maximalwerte und Minimalwerte für X-Koordinaten und Y-Koordinaten in den erhaltenen Koordinaten der Pixel erhält und ein Rechteck, das die erhaltenen Maximalwerte und Minimalwerte der X-Koordinaten und der Y-Koordinaten aufweist, als den Bereich von Interesse (Rb) in dem originalen Vollbereichsbild (It) setzt, wobei

das Teilbereichsbild (Ib) ein Bild des Beobachtungsbilds für nur einen Teilbereich der lichtempfangenen Oberfläche ist und das Teilbereichsbild (Ib) ein Bild des Bereichs von Interesse (Rb) ist, der **durch** die Daten spezifiziert ist, die **durch** die Eingabeeinheit (20) erhalten werden.

2. Bilderfassungsvorrichtung (2, 3) nach Anspruch 1, wobei

das Synthesemittel (19) ferner ein Formänderungsmittel (193) umfasst, das dazu eingerichtet ist, eine Form des Bildes in dem Ersetzungsbereich (Y) zu ändern, um Formen von Konturen des Ersetzungsbereichs (Y) und des Ersetzungszielbereichs (X) anzugleichen, und

das Bildvereinigungsmittel (194) ein Bild in dem Ersetzungszielbereich (X) in dem originalen Vollbereichsbild (X) mit einem Bild in dem Ersetzungsbereich nach der Formänderung (Z) durch das Formänderungsmittel (193) in dem Teilbereichsbild (Ib) ersetzt, um ein Bild in einem anderen Bereich als dem Ersetzungszielbereich (X-) in dem originalen Vollbereichsbild (It) und das Bild in dem Ersetzungsbereich nach der Formänderung (Z) durch das Formänderungsmittel (193) in dem Teilbereichsbild (Ib) miteinander zu vereinigen.

3. Bilderfassungsvorrichtung (2, 3) nach einem der Ansprüche 1 oder 2, ferner umfassend:

ein Belichtungssteuermittel (15), das dazu eingerichtet ist, wenn das Steuermittel zum Erfassen eines originalen Vollbereichsbilds (17) den Bildsensor (11) das originale Vollbereichsbild (It) erfassen lässt, eine Belichtungsbedingung bei der Erfassung als die erste Belichtungsbedingung zu setzen und das dazu eingerichtet ist, wenn das Steuermittel zum Erfassen eines Teilbereichsbilds (17) den Bildsensor (11) das Teilbereichsbild (Ib) erfassen lässt, eine Belichtungsbedingung bei der Erfassung als die zweite Belichtungsbedingung (Z) zu setzen.

4. Bilderfassungsvorrichtung (2, 3) nach einem der Ansprüche 1 bis 3, wobei

das Steuermittel zum Erfassen eines Teilbereichsbilds (17) den Bildsensor (11) eine Vielzahl von Teilbereichsbildern (Ib1, Ib2) erfassen lässt, und

das Synthesemittel (19) durch Synthese des originalen Vollbereichsbilds (It) und einer Vielzahl der Teilbereichsbilder (Ib1, Ib2) ein Stück des Vollbereichsbilds erhält, das einen weiteren dynamischen Bereich als das originale Vollbereichsbild (It) aufweist.

5. Bildsyntheseverfahren umfassend:

Erkennen, aus einem originalen Vollbereichsbild (It), welches durch einen Bildsensor (11) unter einer ersten Belichtungsbedingung erfasst wird und das ein Bild eines Beobachtungsbilds ist, das auf einer lichtempfangenen Oberfläche des Bildsensors (11) gebildet ist, und welches ein Bild des Beobachtungsbilds für einen vollen Bereich der lichtempfangenen Oberfläche des Bildsensors (11) ist, eines Ersetzungszielbereichs (X), der aus einer Gruppe von Pixeln besteht, die einen Helligkeitswert aufweisen, der einen vorbestimmten Schwellenwert in den Pixeln übersteigt, die das originale Vollbereichsbild (It) bilden;

Erkennen, aus einem Teilbereichsbild (Ib), welches durch den Bildsensor (11) unter einer zweiten Belichtungsbedingung, die von der ersten Belichtungsbedingung verschieden ist, erfasst wird und das ein Bild eines Beobachtungsbilds ist, das auf einer lichtempfangenden Oberfläche des Bildsensors (11) gebildet ist, eines Ersetzungsbereichs (Y), der geschätzt wird, um dem Ersetzungszielbereich (X) zu entsprechen, wobei der Ersetzungsbereich (Y) auf der Basis eines Verhältnisses der Belichtungszeiten für das originale Vollbereichsbild (It) und das Teilbereichsbild (Ib) geschätzt wird, um den Schwellenwert in dem originalen Vollbereichsbild (It) zu übersteigen; und

Durchführen einer Bildverarbeitung, um ein Bild in dem Ersetzungszielbereich (X) in dem originalen Vollbereichsbild (It) mit einem Bild in dem Ersetzungsbereich (Y) in dem Teilbereichsbild (Ib) zu ersetzen, um das Bild in einem anderen Bereich als dem Ersetzungszielbereich (X-) in dem originalen Vollbereichsbild (It) und ein Bild in dem Ersetzungsbereich (Y) in dem Teilbereichsbild (Ib) miteinander zu vereinigen,

**gekennzeichnet durch**

Erhalten, von einem Benutzer, einer Eingabe von Daten, die einen Bereich von Interesse (Rb) von einem Teilbereich in dem Beobachtungsbild spezifizieren, das auf ein Vollbereichsbild reflektiert wird, wobei die Daten, die einen Bereich von Interesse (Rb) spezifizieren, einen Schwellenwert eines Helligkeitswerts von einem Pixel angeben, der das originale Vollbereichsbild (It) bildet, und ein Bereich von Interesse (Rb) in dem originalen Vollbereichsbild (It) als ein Bereich von Interesse (Rb) gesetzt wird, der alle Pixel in den Pixeln, die das originale Vollbereichsbild (It) bilden, umfasst, die einen Helligkeitswert gleich oder oberhalb des Schwellenwertes aufweisen, der **durch** die Daten angegeben wird, die einen Bereich von Interesse (Rb) spezifizieren, wobei das Setzen des Bereichs von Interesse (Rb) das Erhalten, über jeden der Pixel, der einen Helligkeitswert gleich oder oberhalb des vorbestimmten Schwellenwerts aufweist, von XY orthogonalen zweidimensionalen Koordinaten, die die Position der Pixel auf dem Vollbereichsbild repräsentieren, das Erhalten von Maximalwerten und Minimalwerten für X-Koordinaten und Y-Koordinaten in den erhaltenen Koordinaten der Pixel und das Setzen eines Rechtecks, das die erhaltenen Maximalwerte und Minimalwerte der X-Koordinaten und der Y-Koordinaten aufweist, als den Bereich von Interesse (Rb) in dem originalen Vollbereichsbild (It) umfasst, wobei das Teilbereichsbild (It) ein Bild des Beobachtungsbilds für nur einen Teilbereich der lichtempfangenen Oberfläche des Bildsensors (11) ist und das Teilbereichsbild (Ib) ein Bild des Bereichs von Interesse (Rb) ist, der **durch** die Daten spezifiziert ist, welche den Bereich von Interesse (Rb) spezifizieren.

6. Bildsyntheseverfahren nach Anspruch 5, ferner umfassend:

Ändern einer Form des Bildes in dem Ersetzungsbereich (Y), um Formen von Konturen des Ersetzungsbereichs (Y) und des Ersetzungszielbereichs (X) anzugleichen, wobei bei der Bildverarbeitung, eine Bildverarbeitung durchgeführt wird, um ein Bild in dem Ersetzungszielbereich (X) in dem originalen Vollbereichsbild (It) mit dem Bild in dem Ersetzungsbereich nach dem Verändern (Z) in dem Teilbereichsbild (Ib) zu ersetzen, um ein Bild in einem anderen Bereich als dem Ersetzungszielbereich (X-) in dem originalen Vollbereichsbild (It) und ein Bild in dem Ersetzungsbereich nach dem Verändern (Z) in dem Teilbereichsbild (Ib) miteinander zu vereinigen.

7. Mikroskopsystem umfassend ein Mikroskop (1), das ein mikroskopisches Beobachtungsbild einer Probe erhält, und die Bilderfassungsvorrichtung (2, 3) nach einem der Ansprüche 1 bis 4, die ein Bild des mikroskopischen Beobachtungsbilds erhält.

**Revendications**

1. Appareil (2, 3) d'obtention d'images comprenant :

un capteur (11) d'image configuré pour capturer une image d'observation formée sur une surface de réception de lumière ; un moyen (17) de commande de capture d'image de zone entière d'origine configuré pour commander le capteur (11) d'image dans une première condition d'exposition pour amener le capteur (11) d'image à capturer une image (It) de zone entière d'origine étant une photo de l'image d'observation pour une zone entière de la surface de réception de lumière ; un moyen (17) de commande de capture d'image de zone partielle configuré pour commander le capteur (11) d'image dans une deuxième condition d'exposition étant différente de la première condition d'exposition pour amener le capteur (11) d'image à capturer une image (Ib) de zone partielle étant une photo de l'image d'observation formée sur la surface de réception de lumière ; et un moyen (19) de synthétisation comprenant un premier moyen (191) de détection configuré pour détecter, à partir de l'image (It) de zone entière d'origine, une zone (X) cible de remplacement composée d'un groupe de pixels dont la valeur de luminance dépasse une valeur de seuil prédéterminée dans les pixels constituant l'image (It) de zone entière d'origine ; un deuxième moyen (192) de détection configuré pour détecter une zone (Y) de remplacement estimée pour correspondre à la zone (X) cible de remplacement à partir de l'image (Ib) de zone partielle, la zone (Y) de remplacement étant estimée dépasser la valeur de seuil dans l'image (It) de zone entière d'origine sur la base d'un rapport des temps d'exposition pour l'image (It) de zone entière d'origine et l'image (Ib) de zone partielle ; et un moyen (194) de fusion d'images configuré pour remplacer une photo dans la zone (X) cible de remplacement dans l'image (It) de zone entière d'origine par une photo dans la zone (Y) de remplacement dans l'image (Ib) de zone partielle pour fusionner une photo dans une zone autre que la zone (X-) cible de remplacement dans l'image (It) de zone entière d'origine et une photo dans la zone (Y) de remplacement dans l'image (Ib) de zone partielle pour obtenir une image de zone entière ayant une plage dynamique plus large que l'image (It) de zone entière d'origine,

**caractérisé par**
une unité (20) d'entrée configurée pour obtenir à partir d'un utilisateur de l'appareil (2, 3) d'obtention d'images une entrée d'information qui spécifie une région d'intérêt (Rb) d'une zone partielle dans l'image d'observation réfléchie sur une image (It) de zone entière, dans lequel l'information qui spécifie une région d'intérêt (Rb) indique un seuil d'une valeur de luminance d'un pixel constituant l'image (It) de zone entière d'origine, l'appareil (2, 3) d'obtention d'images comprenant en outre un moyen (14) d'établissement de région d'intérêt configuré pour établir, dans l'image (It) de zone entière d'origine, une région d'intérêt (Rb) qui comprend tous les pixels ayant une valeur de luminance égale ou supérieure à la valeur de seuil indiquée par l'information qui spécifie une région d'intérêt (Rb) dans les pixels constituant une image (It) de zone entière d'origine, dans lequel

le moyen (14) d'établissement de région d'intérêt obtient, concernant chacun des pixels ayant une valeur de luminance égale ou supérieure à la valeur de seuil prédéterminée, des coordonnées en deux dimensions orthogonales XY représentant une position des pixels sur l'image de zone entière ; obtient une valeur maximale et une valeur minimale pour les coordonnées X et les coordonnées Y dans les coordonnées obtenues des pixels ; et établit un rectangle comportant la valeur maximale et la valeur minimale obtenues des coordonnées X et des coordonnées Y en tant que région d'intérêt (Rb) dans l'image (It) de zone entière d'origine, dans lequel l'image (Ib) de zone partielle est une photo de l'image d'observation uniquement pour une zone partielle de la surface de réception de lumière et l'image (Ib) de zone partielle est une image de la région d'intérêt (Rb) spécifiée par l'information obtenue par l'unité (20) d'entrée.

2. Appareil (2, 3) d'obtention d'images selon la revendication 1, dans lequel
le moyen (19) de synthétisation comprend en outre un moyen (193) de changement de forme configuré pour changer une forme de la photo dans la zone (Y) de remplacement pour faire correspondre les formes des contours de la zone (Y) de remplacement et de la zone (X) cible de remplacement, et
le moyen (194) de fusion d'images remplace une photo dans la zone (X) cible de remplacement dans l'image (X) de zone entière d'origine par une photo dans la zone de remplacement après le changement (Z) de forme par le moyen (193) de changement de forme dans l'image (Ib) de zone partielle, pour fusionner une photo dans une zone autre que la zone (X-) cible de remplacement dans l'image (It) de zone entière d'origine et la photo dans la zone de remplacement après le changement (Z) de forme par le moyen (193) de changement de forme dans l'image (Ib) de zone partielle.

3. Appareil (2, 3) d'obtention d'images selon l'une quelconque des revendications 1 ou 2, comprenant en outre
un moyen (15) de commande d'exposition configuré pour établir, lorsque le moyen (17) de commande de capture d'image (It) de zone entière d'origine amène le capteur (11) d'image à capturer l'image (It) de zone entière d'origine, une condition d'exposition de capture à la première condition d'exposition et configuré pour établir, lorsque le moyen (17) de commande de capture d'image de zone partielle amène le capteur (11) d'image à capturer l'image (Ib) de zone partielle, une condition d'exposition de capture à la deuxième condition d'exposition.

4. Appareil (2, 3) d'obtention d'images selon l'une quelconque des revendications 1 à 3, dans lequel
le moyen (17) de commande de capture d'image de zone partielle amène le capteur (11) d'image à capturer une pluralité d'images (Ib1, Ib2) de zones partielles, et
le moyen (19) de synthétisation obtient une partie de l'image de zone entière ayant une plage dynamique plus large que l'image (It) de zone entière d'origine en synthétisant l'image (It) de zone entière d'origine et une pluralité d'images (Ib1 Ib2) de zones partielles.

5. Procédé de synthèse d'images comprenant les étapes consistant à :

détecter, à partir d'une image (It) de zone entière d'origine capturée par un capteur (11) d'image dans une première condition d'exposition étant une photo d'une image d'observation formée sur une surface de réception de lumière du capteur (11) d'image et étant une photo de l'image d'observation pour une zone entière de la surface de réception de lumière du capteur (11) d'image, une zone (X) cible de remplacement composée d'un groupe de pixels ayant une valeur de luminance dépassant une valeur de seuil prédéterminée dans les pixels constituant l'image (It) de zone entière d'origine ;
détecter, à partir d'une image (Ib) de zone partielle capturée par le capteur (11) d'image dans une deuxième condition d'exposition, qui est différente de la première condition d'exposition, étant une photo d'une image d'observation formée sur une surface de réception de lumière du capteur (11) d'image, une zone (Y) de remplacement estimée correspondre à la zone (X) cible de remplacement, la zone (Y) de remplacement étant estimée dépasser la valeur de seuil dans l'image (It) de zone entière d'origine sur la base d'un rapport des temps d'exposition pour l'image (It) de zone entière d'origine et l'image (Ib) de zone partielle ; et
réaliser un traitement d'image pour remplacer une photo dans la zone (X) cible de remplacement dans l'image (It) de zone entière d'origine par une photo dans la zone (Y) de remplacement dans l'image (Ib) de zone partielle pour fusionner la photo dans une zone autre que la zone (X-) cible de remplacement dans l'image (It) de zone entière d'origine et une photo dans la zone (Y) de remplacement dans l'image (Ib) de zone partielle,
**caractérisé par**

l'obtention, à partir d'un utilisateur, d'une entrée d'une information qui spécifie une région d'intérêt (Rb) d'une zone partielle dans l'image d'observation réfléchie sur l'image de zone entière, dans laquelle l'information qui spécifie une région d'intérêt (Rb) indique un seuil d'une valeur de luminance d'un pixel constituant l'image (It) de zone entière d'origine, et une région d'intérêt (Rb) est établie, dans l'image (It) de zone entière d'origine, en tant que région d'intérêt (Rb) qui inclut tous les pixels ayant une valeur de luminance égale ou supérieure à la valeur de seuil indiquée par l'information qui spécifie une région d'intérêt (Rb) dans les pixels constituant une image (It) de zone entière d'origine, dans lequel l'établissement de la région d'intérêt (Rb) comprend l'obtention, concernant chacun des pixels ayant une valeur de luminance égale ou supérieure à la valeur de seuil prédéterminée, de coordonnées en deux dimensions orthogonales XY représentant une position des pixels sur l'image de zone entière ; l'obtention d'une valeur maximale et d'une valeur minimale pour les coordonnées X et les coordonnées Y dans les coordonnées obtenues des pixels ; et l'établissement d'un rectangle comportant la valeur maximale et la valeur minimale obtenues des coordonnées X et des coordonnées Y en tant que région d'intérêt (Rb) dans l'image (It) de zone entière d'origine, dans lequel

l'image (Ib) de zone partielle est une photo de l'image d'observation uniquement pour une zone partielle de la surface de réception de lumière du capteur (11) d'image et l'image (Ib) de zone partielle est une photo de la région d'intérêt (Rb) spécifiée par l'information qui spécifie la région d'intérêt (Rb).

6. Procédé de synthèse d'images selon la revendication 5, comprenant en outre l'étape consistant à changer une forme de la photo dans la zone (Y) de remplacement pour faire correspondre les formes des contours de la zone (Y) de remplacement et de la zone (X) cible de remplacement, dans lequel dans le traitement d'image, un traitement d'image est réalisé pour remplacer une photo dans la zone (X) cible de remplacement dans l'image (It) de zone entière d'origine par la photo dans la zone de remplacement après le changement (Z) dans l'image (Ib) de zone partielle, pour fusionner une photo dans une zone autre que la zone (X-) cible de remplacement dans l'image (It) de zone entière d'origine et une photo dans la zone de remplacement après le changement (Z) dans l'image (Ib) de zone partielle.

7. Système de microscope comprenant un microscope (1) obtenant une image d'observation microscopique d'un échantillon et l'appareil (2, 3) d'obtention d'images selon l'une quelconque des revendications 1 à 4 obtenant une photo de l'image d'observation microscopique.

F I G. 1

F I G. 2

He

EFFECTIVE PIXEL
AREA

VD

F I G.  3 A

F I G.  3 B

F I G. 4

```
                    ┌──────────────┐
                    │    START     │
                    └──────┬───────┘
    ┌──────────────────────┼──────────────────────────────────────┐
    │                      ▼                                        │
    │          ┌────────────────────────┐                          │
    │          │   CAPTURE ORIGINAL     │  ～ S21                   │
    │          │   ENTIRE-AREA IMAGE    │                          │
    │          └───────────┬────────────┘                          │
    │                      ▼                                        │
    │          ┌────────────────────────┐                          │
    │          │   RECORD IMAGE SIGNAL  │  ～ S22                   │
    │          └───────────┬────────────┘                          │
    │                      ▼                                        │
    │          ┌────────────────────────┐                          │
    │          │  DISPLAY CAPTURED IMAGE │  ～ S23                  │
    │          └───────────┬────────────┘                          │
    │                      ▼        S24                             │
    │                    ╱─────────╲         N                      │
    │                   ╱  CORRECT  ╲───────────────────┐           │
    │                   ╲  EXPOSURE? ╱                   │           │
    │                    ╲─────────╱                     │           │
    │                      │ Y                           ▼           │
    │          ┌────────────────────────┐           S25             │
    │          │  EXPOSURE CORRECTION   │  ～ S26   ╱─────────╲   N  │
    │          └───────────┬────────────┘         ╱ TERMINATE ╲─────┘
    │                      ▼                       ╲  IMAGE    ╱
    │          ┌────────────────────────┐          ╲CAPTURING?╱
    │          │   STORE IMAGE CAPTURING │  ～ S27   ╲─────────╱
    │          │      CONDITION          │              │ Y
    │          └───────────┬────────────┘              ▼
    └──────────────────────┘                    ┌──────────────┐
                                                │     END      │
                                                └──────────────┘
```

F I G.  5 A

START

S11

Y ◇ PERFORM WDR SYNTHESIS? N

S12

WDR SYNTHESIZED IMAGE CAPTURING CONTROL

S13

ORIGINAL ENTIRE-AREA IMAGE CAPTURING CONTROL

END

F I G. 5 B

```
                    ┌──────────────┐
                    │    START     │
                    └──────┬───────┘
                           ▼
        ┌─────────────────────────────────┐
        │  ORIGINAL ENTIRE-AREA           │ ～ S30
        │  IMAGE CAPTURING CONTROL        │
        └────────────────┬────────────────┘
                         ▼
        ┌─────────────────────────────────┐
        │   SET REGION OF INTEREST        │ ～ S31
        └────────────────┬────────────────┘
                         ▼
                       S32   N
        ◇ TERMINATE REGION OF INTEREST SETTING? ◇─────┐
                         │ Y                          │
                         ▼◄───────────────────────────┘
        ┌─────────────────────────────────┐
        │      SET EXPOSURE TIME          │ ～ S33
        └────────────────┬────────────────┘
                         ▼
                       S34   N
        ◇ TERMINATE EXPOSURE TIME SETTING? ◇──────────┐
                         │ Y                          │
                         ▼◄───────────────────────────┘
        ┌─────────────────────────────────┐
        │      SET THRESHOLD VALUE        │ ～ S35
        └────────────────┬────────────────┘
                         ▼
                       S36   N
        ◇ TERMINATE THRESHOLD VALUE SETTING? ◇────────┐
                         │ Y                          │
                         ▼                            │
        ┌─────────────────────────────────┐           │
        │  STORE IMAGE CAPTURING CONDITION│ ～ S37      │
        └────────────────┬────────────────┘           │
                         ▼                            │
        ┌─────────────────────────────────┐           │
        │  WDR SYNTHESIZED IMAGE          │ ～ S38      │
        │  CAPTURING CONTROL              │           │
        └────────────────┬────────────────┘           │
                         ▼                            │
        Y  S39   N                                    │
      ◄──◇ CHANGE SETTING? ◇──────┐                   │
                                  ▼                   │
                                S40                   │
                          ◇ TERMINATE IMAGE           │
                            CAPTURING? ◇──── N ────────┘
                                  │ Y
                                  ▼
                            ┌──────────┐
                            │   END    │
                            └──────────┘
```

F I G. 5 C

START

CAPTURE ORIGINAL ENTIRE-AREA IMAGE ～S41

CAPTURE PARTIAL-AREA IMAGE ～S42

IMAGE SYNTHESIS ～S43

OUTPUT IMAGE ～S44

END

F I G. 5 D

ORIGINAL ENTIRE-AREA IMAGE It

SHOOTING MODE
● ENTIRE-AREA IMAGE CAPTURING MODE
○ WDR SYNTHESIZED IMAGE CAPTURING MODE

EXPOSURE TIME
40 ms

WDR SYNTHESIS SETTING

INTEREST AREA SETTING
● MANUAL SETTING MODE
○ AUTOMATIC SETTING MODE

IMAGING TIME RATIO K
4

THRESHOLD VALUE SETTING
LOWER LIMIT    UPPER LIMIT
254 ~ 255

F I G.  6 A

EP 2 256 688 B1

ORIGINAL ENTIRE-AREA IMAGE It    REGION OF INTEREST Rb

SHOOTING MODE

○ ENTIRE-AREA IMAGE CAPTURING MODE

● WDR SYNTHESIZED IMAGE CAPTURING MODE

EXPOSURE TIME

| 40 | △ ▽ | ms |

WDR SYNTHESIS SETTING

INTEREST AREA SETTING

● MANUAL SETTING MODE

○ AUTOMATIC SETTING MODE

IMAGING TIME RATIO K

| 4 | △ ▽ |

THRESHOLD VALUE SETTING
LOWER LIMIT    UPPER LIMIT

| 250 | △ ▽ | ~ | 255 | △ ▽ |

F I G. 6 B

EP 2 256 688 B1

**FIG. 7**

TIME AXIS

(a) CAPTURED IMAGE

It  Rb  Ib

X−  X  Y  X−  X  X−  Y

(b) PATTERN MATCHING

PATTERN MATCHING

Z

PATTERN MATCHING

Z

PATTERN MATCHING

Z

(c) SYNTHESIZED IMAGE

OPTICAL
SYSTEM

IMAGE
CAPTURING
UNIT  ~11

RECORDING
UNIT  ~12

IMAGE
OUTPUT
UNIT  ~13

10

SYNTHESIZING
UNIT  ~19

PARTIAL AREA
EXTRACTION
UNIT

THRESHOLD
VALUE
SETTING
UNIT

141

14

EXPOSURE
CONTROL
UNIT

15

INPUT
UNIT  ~21

IMAGE CAPTURING
CONDITION STORAGE UNIT  ~16

ORDER ADJUSTMENT
UNIT  ~17

CONDITION SETTING UNIT  ~18

DISPLAY
UNIT  ~20

F I G.  8

(a)    (b)

ORIGINAL IMAGE    BINARIZED IMAGE

(c)

Ymax

Xmin

REGION OF INTEREST

Xmax
Ymin

Y

X

F I G . 9

EP 2 256 688 B1

F I G . 1 0

START

ORIGINAL ENTIRE-AREA
IMAGE CAPTURING CONTROL ⟶ S30

SET REGION OF INTEREST ⟶ S31

TERMINATE REGION OF
INTEREST SETTING? S32
N

Y

SET ANOTHER REGION OF
INTEREST? S51
Y

N

SET EXPOSURE TIME ⟶ S33

TERMINATE EXPOSURE
TIME SETTING? S34
N

Y

SET THRESHOLD VALUE ⟶ S35

TERMINATE THRESHOLD
VALUE SETTING? S36
N

Y

STORE IMAGE CAPTURING CONDITION ⟶ S37

WDR SYNTHESIZED IMAGE
CAPTURING CONTROL ⟶ S38

Y CHANGE SETTING? S39 N

TERMINATE IMAGE
CAPTURING? S40
N

Y

END

F I G. 1 1

(a) CAPTURED IMAGE

(b) PATTERN MATCHING

(c) SYNTHESIZED IMAGE

TIME AXIS

F I G. 1 2

EP 2 256 688 B1

**EP 2 256 688 B1**

**REFERENCES CITED IN THE DESCRIPTION**

**Patent documents cited in the description**

- JP 6141229 A
- JP 2003046857 A
- US 6972791 B1
- JP 4049896 B
- US 20040207734 A1